(19) Europäisches Patentamt European Patent Office Office européen des brevets

(11) **EP 4 503 065 A1**

(12) **EUROPEAN PATENT APPLICATION**
published in accordance with Art. 153(4) EPC

(43) Date of publication:
**05.02.2025 Bulletin 2025/06**

(21) Application number: **23780633.6**

(22) Date of filing: **28.03.2023**

(51) International Patent Classification (IPC):
*H01B 13/00* [(2006.01)]   *C01B 25/14* [(2006.01)]

(52) Cooperative Patent Classification (CPC):
**C01B 25/14; H01B 13/00;** Y02E 60/10

(86) International application number:
**PCT/JP2023/012708**

(87) International publication number:
**WO 2023/190624 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.03.2022 JP 2022056723**

(71) Applicant: **Idemitsu Kosan Co.,Ltd.**
**Tokyo 100-8321 (JP)**

(72) Inventors:
• **KAGAMI Narinobu**
  **Tokyo 100-8321 (JP)**
• **ISEKI Yusuke**
  **Tokyo 100-8321 (JP)**
• **KAGOTA Yasuhito**
  **Tokyo 100-8321 (JP)**

(74) Representative: **Vossius & Partner**
**Patentanwälte Rechtsanwälte mbB**
**Siebertstrasse 3**
**81675 München (DE)**

(54) **METHOD FOR MANUFACTURING SULFIDE SOLID ELECTROLYTE**

(57) Provided is a method for producing a sulfide solid electrolyte containing mixing a raw material-containing substance containing lithium atoms, phosphorus atoms, sulfur atoms and halogen atoms and a complexing agent to obtain an electrolyte precursor-containing substance; and then heating in a solvent having a boiling point which is higher than the boiling point of the complexing agent, which efficiently produces a sulfide solid electrolyte having high ionic conductivity while using a liquid phase method, and which is easy to mass-produce.

**EP 4 503 065 A1**

**Description**

Technical Field

The present invention relates to a method for producing a sulfide solid electrolyte.

Background Art

In recent years, with the rapid spread of information-related devices such as personal computers, video cameras, and mobile phones, and communication devices, etc., the development of batteries used as a power source for the devices has been regarded as important. Conventionally, electrolytic solution containing flammable organic solvents have been used in batteries used for such applications, however by making the battery all-solid, a battery in which the electrolytic solution is replaced with a solid electrolyte layer has been developed because a flammable organic solvent is not used in the battery, simplification of safety devices is achieved, and the production cost and productivity are excellent.

Methods for producing a solid electrolyte used for a solid electrolyte layer are broadly divided into a solid phase method and a liquid phase method, and the liquid phase method includes a homogeneous method in which a solid electrolyte material is completely dissolved in a solvent, and a heterogeneous method in which a solid electrolyte material is not completely dissolved and a solid electrolyte is produced through a suspension of a solid-liquid coexistence. For example, among the liquid phase methods, as a homogeneous method, a method of dissolving a solid electrolyte in a solvent and reprecipitating the solid electrolyte is known (for example, see PTL 1), and further, as a heterogeneous method, a method of reacting a solid electrolyte raw material such as lithium sulfide in a solvent containing a polar aprotic solvent is known (for example, see PTLs 2 and 3, and NPL 1).

Furthermore, a method for producing a solid electrolyte which contains mixing a complexing agent and a solid electrolyte raw material to prepare an electrolyte precursor (for example, see PTL 4) by using a specific compound having amino groups as the complexing agent, and a method for producing a solid electrolyte which contains drying a slurry containing a complexing agent and an electrolyte precursor by fluidized drying using media particles (see, for example, PTL 5), etc.,are also known.

Citation List

Patent Literature

PTL1: JP 2014-191899 A
PTL2: WO 2014/192309 A
PTL3: WO 2018/054709 A
PTL4: WO 2020/105737 A
PTL5: WO 2021/230189 A

Non Patent Literature

NPL 1: CHEMISTRY OF MATERIALS, 2017, No. 29, pp. 1830-1835

Summary of Invention

Technical Problem

The present invention has been made in view of these circumstances, and the purpose is to provide a producing method which efficiently produces sulfide solid electrolyte having high ionic conductivity while adopting liquid phase method, and which is easy to mass-produce.

Solution to Problem

A method for producing a sulfide solid electrolyte according to the present invention is a method for producing a sulfide solid electrolyte containing:

mixing a raw material-containing substance containing lithium atoms, phosphorus atoms, sulfur atoms and halogen atoms and a complexing agent to obtain an electrolyte precursor-containing substance; and then
heating in a solvent having a boiling point which is higher than the boiling point of the complexing agent.

Advantageous Effects of Invention

According to the present invention, a producing method which efficiently produces sulfide solid electrolyte having high ionic conductivity while adopting a liquid phase method, and which is easy to mass-produce, can be provided.

Brief Description of Drawings

[Fig. 1] X-ray diffraction spectrum of the powder obtained in Example 1.
[Fig. 2] SEM (scanning electron microscope) photograph of the crystalline sulfide solid electrolyte obtained in Example 1.
[Fig. 3] X-ray diffraction spectrum of the powder obtained in Example 1, Comparative examples 1 and 2.
[Fig. 4] X-ray diffraction spectrum of the powder obtained in Examples 1 and 2.
[Fig. 5] X-ray diffraction spectrum of the powder obtained in Examples 1, 3 and 4.
[Fig. 6] SEM (scanning electron microscope) photograph of the crystalline sulfide solid electrolyte obtained in Comparative example 3.
[Fig. 7] Particle size distribution of the powder obtained in Examples 1 and 2, Comparative examples 3 and 4.
[Fig. 8] X-ray diffraction spectrum of the powder obtained in Example 5.

Description of Embodiments

Hereinafter, an embodiment of the present invention (hereinafter, sometimes referred to as "the present embodiment") will be described. In addition, in the description herein, the numerical values of the upper limit and the lower limit relating to the numerical range of "or more", "or less", and "to" are numerical values that can be arbitrarily combined, and the numerical values of the examples can also be used as the numerical values of the upper limit and the lower limit. Further, the specifications considered to be preferable can be arbitrarily adopted. That is, one specification considered to be preferable can be adopted in combination with one or plurality of other specifications considered to be preferable. It can be said to be more desirable to combine the preferred ones with each other.

(Findings Obtained by the Inventors to Reach the Present Invention)

As a result of intensive studies to solve the above-described problems, the inventors have found the following matters, and have completed the present invention.

By the way, in order to put all-solid batteries into practical use in recent years, a liquid phase method has attracted attention as a method capable of being simply synthesized in a large amount in addition to versatility and applicability.

The liquid phase method has the above-described advantages, on the other hand, there is a problem in that it is difficult to achieve high ionic conductivity compared to the solid phase method due to reasons such as decomposition and loss of some of the solid electrolyte components during precipitation in order to dissolve the solid electrolyte. For example, in the homogeneous method, the raw materials and solid electrolyte are once completely dissolved, therefore the components can be uniformly dispersed in the liquid. However, in the subsequent precipitation step, precipitation progresses according to the solubility specific to each component, therefore it is extremely difficult to precipitate while maintaining the dispersed state of the components. As a result, each component separates and precipitates. Further, in the homogeneous method, the affinity between the solvent and lithium becomes too strong, making it difficult for the solvent to evaporate even when dried after precipitation. For these reasons, the homogeneous method has a problem in that the ionic conductivity of the solid electrolyte significantly declines. Even in the heterogeneous method of solid-liquid coexistence, a part of the solid electrolyte dissolves, therefore there is a problem in that separation occurs due to elution of specific components, making it difficult to obtain a desired solid electrolyte.

Regarding the liquid phase method (heterogeneous method), for example, in the method of producing a sulfide solid electrolyte through an electrolyte precursor using a complexing agent described in PTL4, the step of removing the complexing agent becomes necessary. The inventors focused on a method of removing a complexing agent in a method of producing a sulfide solid electrolyte through an electrolyte precursor using a complexing agent.

In the producing method described in PTL4, removing of the complexing agent is performed by drying the electrolyte precursor-containing substance of slurry form under vacuum and at room temperature to make a powdered electrolyte precursor, and then heating the electrolyte precursor at 120 °C under vacuum (such as Example 1), specifically, performed by using a jacket type heater (such as a vibration dryer) under vacuum. In this way, when a complexing agent is used, it is not possible to remove the complexing agent from the electrolyte precursor by mere drying, therefore a jacket type heater (such as a vibration dryer) is used to heat. However, even though such heaters can remove the complexing agent, when the wall surface inside the heater becomes locally high temperature, there were some cases in which halogen compounds contained in the solid electrolyte aggregate, resulting in deterioration of the solid electrolyte. Therefore, there are restrictions on the temperature conditions when removing the complexing agent, and there is room for improvement in terms of efficiently producing a solid electrolyte. In addition, during the removal of the complexing agent and heating for crystallization, secondary particles are generated in which primary particles with an average particle diameter of approximately 0.1 $\mu$m are aggregated, which increases the oil absorption of the solid electrolyte, resulting that in some cases, it may be necessary to pulverize (atomization) the solid electrolyte after crystallization.

Furthermore, with the increasing demand for sulfide solid electrolytes, there is a need for mass production. However, in the conventional method, since heating is performed under vacuum, the complexing agent is removed in an environment where heat is only transferred by the powder being contact with the inner wall surface (heat transfer surface) of a jacket type heater, therefore, there was also concern about a large impact for increasing size of the equipment, making it being not able to sufficiently cope with it.

Regarding the removal of the complexing agent, no complexing agent is used in PTLs 1 to 3. Further, although it is assumed that a solvent is used in the reaction of solid electrolyte raw materials, no study has been made on a method for removing the solvent.

In the producing method described in PTL 5, a slurry containing a complexing agent and an electrolyte precursor is dried by fluidized drying using media particles. However, in the producing method described in PTL5, since the complexing agent is not removed from the electrolyte precursor when drying the slurry, the removal of the complexing agent from the electrolyte precursor obtained by the drying is performed by heating to 110 °C under vacuum, similar to the producing method described in PTL4 described above (such as Example 1), specifically, performed by using a jacket type heater (such as a vibration dryer) under vacuum. Therefore, the same problem as the producing method described in PTL4 described above occurs.

Therefore, the inventors investigated especially a method for removing the complexing agent from the electrolyte precursor formed from the complexing agent and the solid electrolyte raw material, and found that the complexing agent can be removed from the electrolyte precursor contained in the electrolyte precursor-containing substance by heating the electrolyte precursor-containing substance in a solvent having a boiling point which is higher than the boiling point of the complexing agent. When the complexing agent is removed from the electrolyte precursor by heating in a solvent, it is possible to suppress the deterioration of the solid electrolyte due to contact between the powder of the solid electrolyte and the wall surface of a jacket type heater (such as a vibration dryer) that becomes locally high temperature.

Furthermore, it has been found that since a part of the solid electrolyte is dissolved, the effect of suppressing separation due to elution of specific components can be obtained. This is an unexpected and surprising effect in the liquid phase which is an environment where elution of specific components easily occurs. Furthermore, since heating in the liquid phase is sufficient, there is also the advantage that it is easy to adapt to the increasing size of the equipment.

Based on the above findings, it has been found that in a method for producing a sulfide solid electrolyte by a liquid phase method (heterogeneous method) in which a complexing agent and a solid electrolyte raw material are reacted, by performing the removal of the complexing agent from the powder of the electrolyte precursor by heating in a solvent having a boiling point which is higher than the boiling point of the complexing agent, a sulfide solid electrolyte having high ionic conductivity can be obtained efficiently while adopting the liquid phase method, and mass production becomes easy.

(Regarding the various embodiments of the present embodiments)

A method for producing a sulfide solid electrolyte of the first embodiment of the present embodiment is a method for producing a sulfide solid electrolyte containing:

mixing a raw material-containing substance containing lithium atoms, phosphorus atoms, sulfur atoms and halogen atoms and a complexing agent to obtain an electrolyte precursor-containing substance; and then
heating in a solvent having a boiling point which is higher than the boiling point of the complexing agent.

In a method for producing a sulfide solid electrolyte of the present embodiment, the electrolyte precursor-containing substance obtained by mixing the solid electrolyte raw material and the complexing agent may contain a complexing agent, a solid electrolyte raw material, and a solvent which were not contributing to the formation of the electrolyte precursor, together with the electrolyte precursor. In the method for producing a sulfide solid electrolyte of the present embodiment, the complexing agent can be removed from the electrolyte precursor by heating in a solvent having a boiling point which is higher than the boiling point of the complexing agent (hereinafter, it may be simply referred to as a "high boiling point solvent") contained in the electrolyte precursor in the electrolyte precursor-containing substance. When heating in a solvent having a boiling point which is higher than the boiling point of the complexing agent, it is considered that the complexing agent becomes more fluid, separates from the electrolyte precursor, and is removed.

The electrolyte precursor is a precursor of the sulfide solid electrolyte obtained by the producing method of the present embodiment, and what can become a sulfide solid electrolyte by removing the complexing agent. Herein, the complexing agent refers to an agent which complexes, that is, an agent capable of forming a complex, and refers to a compound that is likely to form a complex with the solid electrolyte raw material contained in the raw material-containing substance. Therefore, since the electrolyte precursor is obtained by mixing the raw material-containing substance and the complexing agent, more specifically, it can be said to be a complex formed by the solid electrolyte raw material via the complexing agent.

The producing method of the present embodiment contains obtaining the electrolyte precursor-containing substance and then heating it in a high boiling point solvent. Heating may be performed after obtaining the electrolyte precursor-containing substance, and the object to be heated when heating is the electrolyte precursor-containing substance, and when drying, which will be described later, is performed, is an electrolyte precursor.

When heating the electrolyte precursor-containing substance, and removing the complexing agent from the electrolyte precursor, it is important that the electrolyte precursor-containing substance, especially the electrolyte precursor contained in the electrolyte precursor-containing substance, is heated in a high boiling point solvent. By the direct contact between the electrolyte precursor in the electrolyte precursor-containing substance and the high boiling point solvent, the complexing agent contained in the electrolyte precursor is efficiently heated and quickly removed. Therefore, the regeneration of a complex between the electrolyte precursor from which the complexing agent has been removed and the complexing agent, and the generation of impurities due to the electrolyte precursor and the complexing agent, are suppressed, therefore a sulfide solid electrolyte having few impurities, high quality, and high ionic conductivity can be obtained.

The method for producing a sulfide solid electrolyte of the second embodiment of the present embodiment according to the above first embodiment, is a method
in which the heating temperature of the solvent is higher than the boiling point of the complexing agent.

As described above, the complexing agent contained in the electrolyte precursor becomes more fluid by heating and is removed from the electrolyte precursor. Herein, by heating the high boiling point solvent to a temperature which is higher than the boiling point of the complexing agent, the complexing agent is volatilized, and therefore it becomes easier to separate from the electrolyte precursor. Further, since the separated gaseous complexing agent easily passes through the high boiling point solvent and is discharged out of the system, the separated complexing agent becomes difficult to stay in the high boiling point solvent. Furthermore, the regeneration of a complex with an electrolyte precursor from which the complexing agent was removed and the generation of impurities due to the complexing agent, etc., remained in the high boiling point solvent in addition to the complexing agent remaining in the electrolyte precursor, are suppressed, therefore a sulfide solid electrolyte having few impurities, high quality, and high ionic conductivity can be obtained.

The method for producing a sulfide solid electrolyte of the third embodiment of the present embodiment according to the above first or second embodiment, is a method
in which the solvent is boiled in the heating in the solvent.

By boiling the high boiling point solvent, not only does the complexing agent become easier to separate from the electrolyte precursor, but it is also discharged from the system together with the gas having high-boiling point solvent which is generated when the high-boiling point solvent boils, therefore, rapid separation is facilitated. As a result, the regeneration of a complex between the powder from which the complexing agent was removed from the electrolyte precursor and the generation of impurities are suppressed, therefore a sulfide solid electrolyte having few impurities, high quality, and high ionic conductivity can be more efficiently obtained.

The method for producing a sulfide solid electrolyte of the fourth embodiment of the present embodiment according to the third embodiment, is a method
in which the solvent having a boiling point which is higher than the boiling point of the complexing agent is prepared separately, and the electrolyte precursor-containing substance is added in the solvent used for the heating as a mixture blended with the separately prepared solvent.

As a method for supplying the electrolyte precursor-containing substance, a method in which a high boiling point solvent prepared separately from the high boiling point solvent heated in the heating is mixed with the electrolyte precursor-containing substance, and the obtained mixture is mixed to the high boiling point solvent which is used for heating in the heating, is adopted. Although details will be described later, the mixture is preferably added to a heated high boiling point solvent to be used for heating, and preferably added to a boiled high boiling point solvent. By adopting such a method, unlike the method of adding an electrolyte precursor to a high boiling point solvent which is heated in advance and heating it, the electrolyte precursor is instantly heated to the desired temperature, while gradually controlling the amount of electrolyte precursor added. Therefore, the regeneration of a complex between the powder from which the complexing agent was removed from the electrolyte precursor and the generation of impurities are suppressed, therefore a sulfide solid electrolyte having few impurities, high quality, and high ionic conductivity can be more efficiently obtained.

Herein, the high boiling point solvent prepared separately may be the same type of solvent as the high boiling point solvent heated to boil in the heating, or a different type of solvent may be used, and it is preferable to use the same type of solvent from the viewpoint of more efficiently obtaining a sulfide solid electrolyte having few impurities, high quality, and high ionic conductivity.

The method for producing a sulfide solid electrolyte of the fifth embodiment of the present embodiment according to any one of the above first to fourth embodiments, is a method

in which the amount of the solvent used, relative to 1g of the supplied amount of the electrolyte precursor contained in the electrolyte precursor-containing substance, is 20 mL or more and 2000 mL or less.

By using the high boiling point solvent in an amount within the above range, it becomes possible to separate and remove the complexing agent more efficiently. Therefore, the regeneration of a complex between the powder from which the complexing agent was removed from the electrolyte precursor and the generation of impurities are suppressed, therefore a sulfide solid electrolyte having few impurities, high quality, and high ionic conductivity can be more efficiently obtained.

Furthermore, by suppressing the amount of high boiling point solvent used within a certain range, it becomes possible to cope with mass production more easily.

The method for producing a sulfide solid electrolyte precursor composition of the sixth embodiment of the present embodiment, according to any one of the above first to fifth embodiments, is a method containing:

drying the electrolyte precursor-containing substance.

As described above, in the producing method of the present embodiment, it is important to heat the electrolyte precursor in a high boiling point solvent. As a preliminary step, the electrolyte precursor can be heated more directly by drying the electrolyte precursor-containing substance containing the electrolyte precursor and solvent, etc., the solvent is removed, and the electrolyte precursor is isolated as a powder, which is then heated in a high boiling point solvent. Thereby, by heating the complexing agent contained in the electrolyte precursor more directly, it becomes possible to separate and remove the complexing agent more efficiently.

As a result, the regeneration of a complex with the electrolyte precursor from which the complexing agent has been removed and the generation of impurities are suppressed, therefore a sulfide solid electrolyte having few impurities, high quality, and high ionic conductivity can be more efficiently obtained.

On the other hand, in the conventional method of heating under vacuum using a jacket type heater, heat is only transferred by the electrolyte precursor being contact with the inner wall surface, therefore it is obvious that the contact efficiency is poor and the heat conducting efficiency is low. Therefore, it can be said that according to the producing method of the present embodiment, a sulfide solid electrolyte can be obtained more efficiently than the conventional method.

As described above, drying in the producing method of the present embodiment is to remove the solvent from the electrolyte precursor-containing substance as a main purpose, and it can also remove the remaining complexing agent which were not contributing to the formation of the electrolyte precursor. Therefore, in the producing method of the present embodiment, the removal of the complexing agent from the electrolyte precursor is preformed not by drying, but by heating in a high boiling point solvent. It goes without saying that the complexing agent can also be removed from the electrolyte precursor by heating the electrolyte precursor-containing substance in a high boiling point solvent.

The method for producing a sulfide solid electrolyte of the seventh embodiment of the present embodiment according to the above sixth embodiment, is a method

in which the drying is performed at a temperature of 5 °C or higher and 110 °C or lower under normal pressure or reduced pressure.

As conditions for drying the electrolyte precursor-containing substance, by setting the pressure condition from normal pressure to reduced pressure and the temperature condition from 5°C or higher and 110°C or lower, the electrolyte precursor-containing substance can be dried more efficiently and powder of the electrolyte precursor is obtained.

The method for producing a sulfide solid electrolyte of the eighth embodiment of the present embodiment according to any one of the above first to seventh embodiments, is a method containing:

after the heating in the solvent, further heating at a temperature which is higher than the heating temperature in the heating in the solvent.

By heating in the solvent, the complexing agent is removed from the electrolyte precursor and an amorphous sulfide solid electrolyte is obtained. By further heating this at a temperature higher than the heating temperature in heating in the solvent, a crystalline sulfide solid electrolyte can be obtained.

In the producing method of the present embodiment, it is possible to produce an amorphous sulfide solid electrolyte or a crystalline sulfide solid electrolyte as desired.

The method for producing a sulfide solid electrolyte of the ninth embodiment of the present embodiment according to any one of the above first to eighth embodiments, is a method,

in which the complexing agent is a compound having amino groups,

and the method for producing a sulfide solid electrolyte of the tenth embodiment of the present embodiment according to any one of the above first to ninth embodiments, is a method,
in which the complexing agent is a compound having at least two tertiary amino groups in the molecule.

In the sulfide solid electrolyte of the present embodiment, the complexing agent is a solvent which has the property of forming a complex with the solid electrolyte raw material contained in the raw material-containing substance, as described above. For the complexing agent, as described later, a compound having heteroatoms tends to form a complex with the solid electrolyte raw material, and is therefore a preferable compound as a complexing agent. Among these, when a compound has a nitrogen atom as a heteroatom and a nitrogen atom as amino groups, not only it becomes easier to form a complex, but also halogen atoms, which are difficult to incorporate in the formation of a complex, are more easily incorporated, making it easier to maintain a uniform dispersion state of the solid electrolyte raw material. Therefore, higher ionic conductivity can be easily obtained.

Further, when a compound having amino groups is used as a complexing agent, in addition to the above-described properties, it also has the property of being easily separated from the electrolyte precursor and being easily removed. Therefore, the regeneration of a complex between the powder from which the complexing agent was removed from the powder of the electrolyte precursor and the generation of impurities are suppressed, therefore a sulfide solid electrolyte having few impurities, high quality, and high ionic conductivity can be extremely efficiently obtained.

The method for producing a sulfide solid electrolyte of the eleventh embodiment of the present embodiment according to any one of the above first to tenth embodiments, is a method,

in which the solvent is a hydrocarbon solvent which does not contain heteroatoms,
the method for producing a sulfide solid electrolyte of the twelfth embodiment of the present embodiment according to any one of the above first to eleventh embodiments, is a method,
in which the solvent is at least one organic solvent selected from aliphatic hydrocarbon solvents and alicyclic hydrocarbon solvents, and
the method for producing a sulfide solid electrolyte of the thirteenth embodiment of the present embodiment according to the above twelfth embodiment, is a method,
in which the carbon number of the organic solvent is 8 or more.

As described above, a compound having heteroatoms has the property of easily forming a complex with a solid electrolyte raw material. By using a hydrocarbon solvent which does not contain heteroatoms as the high boiling point solvent, the formation of a complex between the high boiling point solvent and the electrolyte precursor is suppressed, thereby suppressing the generation of impurities, therefore a sulfide solid electrolyte having few impurities, high quality, and high ionic conductivity can be extremely efficiently obtained.

In addition, as the high boiling point solvent, it is preferably at least one organic solvent selected from aliphatic hydrocarbon solvents and alicyclic hydrocarbon solvents, and the carbon number is preferably 8 or more, considering the suppression of impurity generation and the ease of selecting a solvent having a higher boiling point than the complexing agent, etc.

The method for producing a sulfide solid electrolyte of the fourteenth embodiment of the present embodiment according to any one of the above first to thirteenth embodiments, is a method,
in which after the heating in the solvent, no pulverization treatment is performed.

The electrolyte precursor obtained by using a complexing agent originally has a small average particle diameter, however as described above, since a jacket type heater (such as vibration dryer) is used when removing the complexing agent and heating it for crystallization, secondary particles are generated and oil absorption increases, therefore in some cases, pulverization (atomization) may be performed. However, according to the producing method of the present embodiment, secondary particles are not generated due to the use of a jacket type heater (such as vibration dryer), therefore there is no need to perform pulverization (atomization) treatment.

This greatly contributes to energy saving in the production of a sulfide solid electrolyte, and makes it possible to produce a sulfide solid electrolyte more efficiently.

The method for producing a sulfide solid electrolyte of the fifteenth embodiment of the present embodiment according to any one of the first to fourteenth embodiments, is a method,
in which in the heating in the solvent, the complexing agent is removed from the electrolyte precursor contained in the electrolyte precursor-containing substance.

By heating in the solvent, the complexing agent can be removed from the electrolyte precursor contained in the electrolyte precursor-containing substance, and the electrolyte precursor can be a sulfide solid electrolyte.

The method for producing a sulfide solid electrolyte of the sixteenth embodiment of the present embodiment according to any one of the above first to fifteenth embodiments, is a method,
in which the sulfide solid electrolyte has a thio-LISICON Region II type crystal structure.

In the producing method of the present embodiment, it is possible to produce a desired sulfide solid electrolyte by changing the type and blending ratio of the solid electrolyte raw materials contained in the raw material-containing substance. A sulfide solid electrolyte having thio-LISICON Region II type crystal structure is known as a sulfide solid electrolyte with extremely high ionic conductivity, and is preferable as the sulfide solid electrolyte to be obtained by the producing method of the present embodiment.

(Solid electrolyte)

In the description herein, the "solid electrolyte" means an electrolyte that maintains a solid state at 25°C under a nitrogen atmosphere. The solid electrolyte in the present embodiment is a solid electrolyte which contains lithium atoms, sulfur atoms, phosphorus atoms, and halogen atoms, and has ionic conductivity attributed to the lithium atom.

The "solid electrolyte" contains both of an amorphous solid electrolyte and a crystalline solid electrolyte.

In the description herein, the crystalline solid electrolyte is a solid electrolyte in which a peak derived from the solid electrolyte is observed in an X-ray diffraction pattern in X-ray diffractometry, and the presence or absence of a peak derived from a raw material of the solid electrolyte is not considered. That is, the crystalline solid electrolyte includes a crystal structure derived from the solid electrolyte, and a part thereof may be a crystal structure derived from the solid electrolyte, or the whole thereof may be a crystal structure derived from the solid electrolyte. As long as the crystalline solid electrolyte has the X-ray diffraction pattern as described above, a part of the crystalline solid electrolyte may include an amorphous solid electrolyte. Therefore, the crystalline solid electrolyte includes a so-called glass ceramic obtained by heating an amorphous solid electrolyte to a crystallization temperature or higher.

In addition, in the description herein, the amorphous solid electrolyte is a halo pattern in which a peak other than a peak derived from a material is not substantially observed in an X-ray diffraction pattern by an X-ray diffractometry, and the presence or absence of a peak derived from a raw material of the solid electrolyte is not considered.

[Method for producing a sulfide solid electrolyte]

A method for producing a sulfide solid electrolyte according to the present embodiment is a method for producing a sulfide solid electrolyte containing:

mixing a raw material-containing substance containing lithium atoms, phosphorus atoms, sulfur atoms and halogen atoms and a complexing agent to obtain an electrolyte precursor-containing substance: and then
heating in a solvent having a boiling point which is higher than the boiling point of the complexing agent.

[Obtaining electrolyte precursor-containing substance]

The producing method of the present embodiment includes obtaining an electrolyte precursor-containing substance by mixing a raw material-containing substance containing lithium atoms, phosphorus atoms, sulfur atoms, and halogen atoms with a complexing agent.

Regarding the producing method of the present embodiment, the raw material-containing substance will be explained first.

(Raw Material-Containing Substance)

The raw material-containing substance used in the present embodiment contains lithium atoms, sulfur atoms, phosphorus atoms, and halogen atoms, and specifically a containing substance containing a compound (hereinafter, also referred to as a "solid electrolyte raw material") having one or more selected from the group consisting of these atoms. The raw material-containing substance used in the present embodiment is preferably contains two or more of the solid electrolyte raw materials.

Specific examples of the solid electrolyte raw material contained in the raw material-containing substance includes, a raw material containing of at least two atoms selected from the above four atoms, such as lithium sulfides; lithium halides such as lithium fluoride, lithium chloride, lithium bromide, and lithium iodide ; phosphorus sulfides such as diphosphorus trisulfide ($P_2S_3$) and diphosphorus pentasulfide ($P_2S_5$); phosphorus halides such as various phosphorus fluorides ($PF_3$ and PFs), various phosphorus chlorides ($PCl_3$, PCls, and $P_2Cl_4$), various phosphorus bromides ($PBr_3$ and $PBr_5$), and various phosphorus iodides ($PI_3$ and $P_2I_4$); and thiophosphoryl halides such as thiophosphoryl fluoride ($PSF_3$), thiophosphoryl chloride ($PSCl_3$), thiophosphoryl bromide ($PSBr_3$), thiophosphoryl iodide ($PSI_3$), thiophosphoryl dichloride fluoride ($PSCl_2F$), and thiophosphoryl dibromide fluoride ($PSBr_2F$); and halogen simple substances such as fluorine ($F_2$), chlorine ($Cl_2$), bromine ($Br_2$), and iodine ($I_2$), and bromine ($Br_2$) and iodine ($I_2$) are representative and preferred.

Examples that can be used as the solid electrolyte raw materials other than the above include a solid electrolyte raw material containing at least one atom selected from the above four kinds of atoms and containing atoms other than the four kinds of atoms, more specifically, lithium compounds such as lithium oxide, lithium hydroxide, and lithium carbonate: alkali metal sulfides such as sodium sulfide, potassium sulfide, rubidium sulfide, cesium sulfide; metal sulfides such as silicon sulfide, germanium sulfide, boron sulfide, gallium sulfide, tin sulfide ($SnS$, $SnS_2$), aluminum sulfide, and zinc sulfide; phosphate compounds such as sodium phosphate and lithium phosphate; alkali metal halides other than lithium, such as sodium halides such as sodium iodide, sodium fluoride, sodium chloride, and sodium bromide; metal halides such as aluminum halide, silicon halide, germanium halide, arsenic halide, selenium halide, tin halide, antimony halide, tellurium halide, and bismuth halide; and phosphorus oxyhalides such as phosphorus oxychloride ($POCl_3$) and phosphorus oxybromide ($POBr_3$).

Among the above, lithium sulfides, phosphorus sulfide such as diphosphorus trisulfide ($P_2S_3$) and diphosphorus pentasulfide ($P_2S_5$), halogen simple substances such as fluorine ($F_2$), chlorine ($Cl_2$), bromine ($Br_2$), and iodine ($I_2$), and lithium halides such as lithium fluoride, lithium chloride, lithium bromide, and lithium iodide are preferred. Furthermore, when introducing an oxygen atom into the solid electrolyte, phosphoric acid compounds such as lithium oxide, lithium hydroxide, and lithium phosphate are preferred. Preferred combinations of the solid electrolyte raw materials preferably include, for example, a combination of lithium sulfide, diphosphorus pentasulfide, and lithium halide, and a combination of lithium sulfide, diphosphorus pentasulfide, and a halogen simple substance; and as the lithium halide, lithium bromide or lithium iodide are preferred, and as the halogen simple substance, bromine and iodine are preferred.

In the present embodiment, $Li_3PS_4$ containing a $PS_4$ structure can also be used as part of the raw material. Specifically, $Li_3PS_4$ is prepared by producing it first, etc., and used as a raw material.

The content of $Li_3PS_4$ relative to the total raw materials is preferably 60 to 100 mol%, more preferably 65 to 90 mol%, and even more preferably 70 to 80 mol%.

Further, when using $Li_3PS_4$ and a halogen simple substance, the content of the halogen simple substance relative to $Li_3PS_4$ is preferably 1 to 50 mol%, more preferably 10 to 40 mol%, even more preferably 20 to 30 mol%, and further more preferably 22 to 28 mol%.

The lithium sulfide used in the present embodiment is preferably particles.

The average particle diameter ($D_{50}$) of the lithium sulfide particles is preferably 0.1 $\mu$m or more and 1000 $\mu$m or less, more preferably 0.5 $\mu$m or more and 100 $\mu$m or less, and even more preferably 1 $\mu$m or more and 20 $\mu$m or less. In the description herein, the average particle diameter ($D_{50}$) is a particle diameter which reaches 50% (volume-based) of the whole by sequentially integrating particles from the smallest particle diameter when a particle size distribution integration curve is drawn, and the volume distribution is an average particle diameter which can be measured using, for example, a laser diffraction/scattering type particle size distribution measurement device. In addition, among the raw materials exemplified above, it is preferable that the solid raw material has an average particle diameter similar to that of the lithium sulfide particles described above, that is, it is preferable that the solid raw material is within the same range as the average particle diameter of the lithium sulfide particles described above.

When using lithium sulfide, diphosphorus pentasulfide and lithium halide as solid electrolyte raw materials, the ratio of lithium sulfide relative to the total of lithium sulfide and diphosphorus pentasulfide is preferably 70 to 80 mol%, more preferably 72 to 78 mol%, and even more preferably 74 to 78 mol%, from the viewpoint of obtaining higher chemical stability and higher ionic conductivity.

When using lithium sulfide, diphosphorus pentasulfide, lithium halide, and other solid electrolyte raw materials used as necessary, the content of lithium sulfide and diphosphorus pentasulfide relative to the total of these is preferably 50 to 100 mol%, more preferably 55 to 85 mol%, and even more preferably 60 to 75 mol%.

Furthermore, when using lithium bromide and lithium iodide in combination as lithium halides, the ratio of lithium bromide relative to the total of lithium bromide and lithium iodide is preferably 1 to 99 mol%, more preferably 20 to 80 mol%, even more preferably 30 to 70 mol%, and particularly preferably 40 to 60 mol%, from the viewpoint of improving ionic conductivity.

When a single halogen substance is used as the raw material and when lithium sulfide, and diphosphorus pentasulfide are used, relative to the total number of moles of lithium sulfide and diphosphorus pentasulfide excluding lithium sulfide having the same number of moles as the number of moles of the single halogen substance, the ratio of the number of moles of lithium sulfide excluding lithium sulfide having the same number of moles as the number of moles of the single halogen substance preferably falls within a range of 60 to 90%, more preferably falls within a range of 65 to 85%, further preferably falls within a range of 68 to 82%, still more preferably falls within a range of 72 to 78%, particularly preferably falls within a range of 73 to 77%. This is because higher ionic conductivity can be obtained with these ratios.

Further, from the same viewpoint, when using lithium sulfide, diphosphorus pentasulfide, and halogen simple substance, the content of the halogen simple substance relative to the total amount of lithium sulfide, diphosphorus pentasulfide, and halogen simple substance is preferably 1 to 50 mol%, more preferably 2 to 40 mol%, even more preferably 3 to 25 mol%, and further more preferably 3 to 15 mol%.

When using lithium sulfide, diphosphorus pentasulfide, halogen simple substance, and lithium halide, the content of the halogen simple substance ($\alpha$mol%) and the content of lithium halide ($\beta$mol%) relative to the total amount of these, preferably satisfy the following formula (2), more preferably satisfy the following formula (3), even more preferably satisfy the following formula (4), and further more preferably satisfy the following formula (5).

$$2 \leq 2\alpha+\beta \leq 100 \cdots (2)$$

$$4 \leq 2\alpha+\beta \leq 80 \cdots (3)$$

$$6 \leq 2\alpha+\beta \leq 50 \cdots (4)$$

$$6 \leq 2\alpha+\beta \leq 30 \cdots (5)$$

When two types of halogens are used as a simple substance, A1 is the number of moles of one halogen atom in the substance, and A2 is the number of moles of the other halogen atom in the substance, A1:A2 is preferably 1:99 to 99:1, more preferably 10:90 to 90:10, even more preferably 20:80 to 80:20, and further more preferably 30:70 to 70:30.

Further, when the two types of halogen simple substances are bromine and iodine, the number of moles of bromine is B1 and the number of moles of iodine is B2, B1:B2 is preferably 1:99 to 99:1, more preferably 15:85 to 90:10, even more preferably 20:80 to 80:20, further more preferably 30:70 to 75:25, and particularly preferably 35:65 to 75:25.

(Complexing agent)

As described above, the complexing agent is a compound that easily forms a complex with the solid electrolyte raw material contained in the raw material-containing substance, for example, it is a compound which can form a complex with lithium sulfide, diphosphorus pentasulfide, which are preferably used as solid electrolyte raw materials, $Li_3PS_4$ obtained when these are used, and a solid electrolyte raw material (hereinafter, also collectively referred to as "solid electrolyte raw materials, etc.") further containing halogen atoms.

As the complexing agent, any compound having the above-described properties can be used without any particular limitations, and in particular, compounds containing atoms that have a high affinity with lithium atoms, such as heteroatoms such as nitrogen atoms, oxygen atoms, and chlorine atoms, are preferred, and compounds having a group containing these heteroatoms are more preferred. This is because these heteroatoms and the group containing heteroatoms can coordinate (bond) with lithium.

The heteroatoms present in the molecules of the complexing agent have a high affinity with lithium atoms and it is considered to have the property which easily combine with solid electrolyte raw materials, etc., to form complexes (hereinafter also simply referred to as "complexes"). Therefore, it is considered that by mixing the solid electrolyte raw material and the complexing agent, a complex is formed, and the dispersion state of the solid electrolyte raw material, especially the dispersion state of halogen atoms, is easily maintained uniformly, and as a result, a sulfide solid electrolyte having high ionic conductivity can be obtained.

Regarding the ability of the complexing agent to form a complex with the solid electrolyte raw materials, etc., it can be directly confirmed by, for example, an infrared absorption spectrum measured by FT-IR analysis (diffuse reflection method).

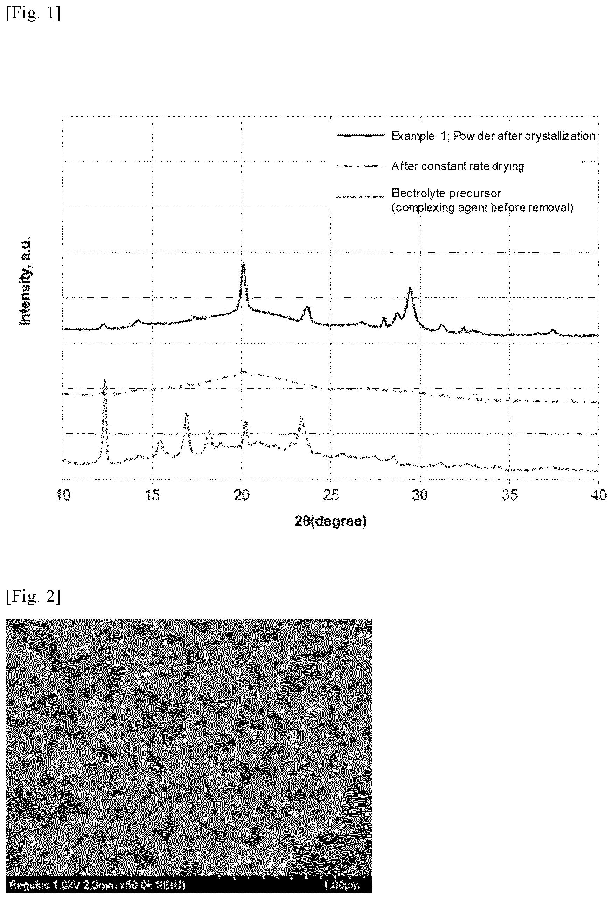

As a complexing agent, when a powder obtained by stirring tetramethylethylenediamine (hereinafter also simply referred to as "TMEDA"), which is one of the preferable complexing agents, and lithium iodide (LiI), and the complexing agent itself are analyzed by FT-IR analysis (diffuse reflection method), the spectrum is different from that of TMEDA itself, especially in the peak derived from the C-N stretching vibration at 1000 to 1250 cm$^{-1}$. Furthermore, even considering that it is known that a LiI-TMEDA complex is formed by stirring and mixing TMEDA and lithium iodide (for example, see Aust. J. Chem., 1988, 41, 1925-34, especially Fig. 2), etc., it is reasonable to think that a LiI-TMEDA complex is formed.

Furthermore, for example, when a powder obtained by stirring a complexing agent (TMEDA) and $Li_3PS_4$ is analyzed by FT-IR analysis (diffuse reflection method) in the same manner as above, it can be confirmed that the spectrum differs from the spectrum of TMEDA itself in the peak derived from the C-N stretching vibration at 1000 to 1250 cm$^{-1}$, on the other hand it can also be confirmed that the spectrum is similar to that of the LiI-TMEDA complex. From this, it may be considered that a $Li_3PS_4$-TMEDA complex is formed.

In the producing method of the present embodiment, these complexes obtained by mixing raw material-containing substances and a complexing agent are used as an electrolyte precursor, and the complexing agent is removed from the electrolyte precursor powder using a high boiling point solvent to produce the sulfide solid electrolyte.

The complexing agent preferably has at least two heteroatoms which can be coordinated (bonded) in the molecule, and more preferably has a group containing at least two heteroatoms in the molecule. By having a group containing at least two heteroatoms in the molecule, solid electrolyte raw materials, etc. can be bonded via at least two heteroatoms in the molecule. Further, among the heteroatoms, nitrogen atoms are preferred, and as the group containing nitrogen atoms, amino groups are preferred. That is, an amine compound is preferred as the complexing agent.

The amine compound is not particularly limited as long as it has an amino group in its molecule since it can promote the formation of a complex, however a compound having at least two amino groups in its molecule is preferred. By having such structures, solid electrolyte raw materials, etc. can be bonded via at least two nitrogen atoms in the molecule, to form the complex.

Examples of such amine compounds include amine compounds such as aliphatic amines, alicyclic amines, heterocyclic amines, and aromatic amines, which can be used alone or in combination.

More specifically, as the aliphatic amines, aliphatic primary diamines such as ethylenediamine, diaminopropane, and diaminobutane: aliphatic secondary diamines such as N,N'-dimethylethylenediamine, N,N'-diethylethylenediamine, N,N'-dimethyldiaminopropane, N,N'-diethyldiaminopropane: and aliphatic tertiary diamines such as N,N,N',N'-tetramethyldiaminomethane, N,N,N',N'-tetramethylethylenediamine, N,N,N',N'-tetraethylethylenediamine, N,N,N',N'-tetramethyldiaminopropane, N,N,N',N'-tetraethyldiaminopropane, N,N,N',N'-tetramethyldiaminobutane, N,N,N',N'-tetramethyldiaminopentane , and N,N,N',N'-tetramethyldiaminohexane; are representatively preferred. In the examples in the present description, for example, in the case of diaminobutane, unless otherwise specified, in addition to isomers regarding the position of the amino groups such as 1,2-diaminobutane, 1,3-diaminobutane, and 1,4-diaminobutane, all isomers, such as linear and branched isomers for butane, are included.

The carbon number of the aliphatic amine is preferably 2 or more, more preferably 4 or more, and even more preferably 6 or more, and the upper limit is preferably 10 or less, more preferably 8 or less, and even more preferably 7 or less. The carbon number in the aliphatic hydrocarbon group in the aliphatic amine is preferably 2 or more, and the upper limit is preferably 6 or less, more preferably 4 or less, and even more preferably 3 or less.

As the alicyclic amines, alicyclic diamines; such as alicyclic primary diamines such as cyclopropanediamine and cyclohexanediamine; alicyclic secondary diamines such as bisaminomethylcyclohexane; and alicyclic tertiary diamines such as N,N,N',N'-tetramethyl-cyclohexane diamine and bis(ethylmethylamino)cyclohexane; are representativelyy preferred, and in addition, as the heterocyclic amine, heterocyclic diamines; such as heterocyclic primary diamines such as isophorone diamine: heterocyclic secondary diamines such as piperazine and dipiperidylpropane; and heterocyclic tertiary diamines such as N,N-dimethylpiperazine and bismethylpiperidylpropane; are representatively preferred.

The carbon number of the alicyclic amine and heterocyclic amine is preferably 3 or more, more preferably 4 or more, and the upper limit is preferably 16 or less, more preferably 14 or less.

In addition, as the aromatic amines, aromatic diamines; such as aromatic primary diamines such as phenyl diamine, tolylene diamine, and naphthalene diamine; aromatic secondary diamines such as N-methylphenylenediamine, N,N'-dimethylphenylenediamine, N,N'-bismethylphenylphenylenediamine, N,N'-dimethylnaphthalenediamine, and N-naphthylethylenediamine; and aromatic tertiary diamines such as N,N-dimethylphenylenediamine, N,N,N',N'-tetramethylphenylenediamine, N,N,N',N'-tetramethyldiaminodiphenylmethane, and N,N,N',N'-tetramethyl naphthalenediamine; are representatively preferred.

The carbon number of the aromatic amine is preferably 6 or more, more preferably 7 or more, and even more preferably 8 or more, and the upper limit is preferably 16 or less, more preferably 14 or less, and even more preferably 12 or less.

The amine compound used in the present embodiment may be substituted with a substituent such as an alkyl group, an alkenyl group, an alkoxyl group, a hydroxy group, a cyano group, or a halogen atom.

Although diamine was illustrated as a specific example, it goes without saying that the amine compound that can be used in the present embodiment is not limited to diamine, for example, aliphatic monoamines corresponding to various diamines such as trimethylamine, triethylamine, ethyldimethylamine, and the above aliphatic diamines, also, piperidine compounds such as piperidine, methylpiperidine, and tetramethylpiperidine, pyridine compounds such as pyridine and picoline, morpholine compounds such as morpholine, methylmorpholine, and thiomorpholine, imidazole compounds such as imidazole and methylimidazole, alicyclic monoamines corresponding to the above-described alicyclic diamines such as monoamines, a heterocyclic monoamine corresponding to the above heterocyclic diamine, monoamines corresponding to the above aromatic diamines such as aromatic monoamines, in addition, for example, polyamines having three or more amino groups such as diethylenetriamine, N,N',N"-trimethyldiethylenetriamine, N,N,N',N",N"-pentamethyldiethylenetriamine, triethylenetetramine, N,N'-bis[(dimethylamino)ethyl] -N,N'-dimethylethylenediamine, hexamethylenetetramine, and tetraethylenepentamine, can also be used.

Among the above, from the viewpoint of obtaining higher ionic conductivity, tertiary amines having a tertiary amino group as the amino group are preferred, a tertiary diamine having two tertiary amino groups are more preferred, a tertiary diamine having two tertiary amino groups at both ends are even more preferred, and an aliphatic tertiary diamine having tertiary amino groups at both ends are further more preferred. In the above amine compound, as the aliphatic tertiary diamine having tertiary amino groups at both ends, tetramethylethylenediamine, tetraethylethylenediamine, tetramethyldiaminopropane, and tetraethyldiaminopropane are preferred, and considering ease of availability, etc., tetramethylethylenediamine and tetramethyldiaminopropane are preferred.

Further, a compound having groups other than amino groups, such as a nitro group or an amide group, which contains a nitrogen atom as a heteroatom, can also obtain the same effect.

In the producing method of the present embodiment, as the complexing agent, in addition to a compound containing the above-described nitrogen atoms as a heteroatom, a compound containing oxygen atoms is preferred.

As the compound containing oxygen atoms, a compound having one or more functional groups selected from an ether group and an ester group as a group containing an oxygen atom is preferable, and among these, a compound having an ether group is particularly preferred. That is, as the complexing agent containing oxygen atoms, an ether compound is particularly preferred.

Examples of the ether compound include ether compounds such as aliphatic ether, alicyclic ether, heterocyclic ether, and aromatic ether, which can be used alone or in combination.

More specifically, examples of the aliphatic ether include, monoethers such as dimethyl ether, diethyl ether, diisopropyl ether, dibutyl ether, and tert-butyl methyl ether; diethers such as dimethoxymethane, dimethoxyethane, diethoxymethane, and diethoxyethane; polyethers having three or more ether groups such as diethylene glycol dimethyl ether (diglyme) and triethylene oxide glycol dimethyl ether (triglyme); and ethers containing hydroxy groups such as diethylene glycol and triethylene glycol.

The carbon number of the aliphatic ether is preferably 2 or more, more preferably 3 or more, and even more preferably 4 or more, and the upper limit is preferably 10 or less, more preferably 8 or less, and even more preferably 6 or less.

The carbon number of the aliphatic hydrocarbon group in the aliphatic ether is preferably 1 or more, and the upper limit is preferably 6 or less, more preferably 4 or less, and even more preferably 3 or less.

Examples of the alicyclic ethers include ethylene oxide, propylene oxide, tetrahydrofuran, tetrahydropyran, dimethoxytetrahydrofuran, cyclopentyl methyl ether, dioxane, and dioxolane, and examples of the heterocyclic ethers include furan, benzofuran, benzopyran, dioxene, dioxin, morpholine, methoxyindole, and hydroxymethyldimethoxypyridine.

The carbon number of the alicyclic ether and heterocyclic ether is preferably 3 or more and more preferably 4 or more, and the upper limit is preferably 16 or less and more preferably 14 or less.

Examples of the aromatic ethers include methyl phenyl ether (anisole), ethyl phenyl ether, dibenzyl ether, diphenyl ether, benzylphenyl ether, and naphthyl ether.

The carbon number of the aromatic ether is preferably 7 or more and more preferably 8 or more, and the upper limit is preferably 16 or less, more preferably 14 or less, and even more preferably 12 or less.

The ether compound used in the present embodiment may be substituted with a substituent such as an alkyl group, an alkenyl group, an alkoxyl group, a hydroxy group, a cyano group, or a halogen atom.

Among the above ether compounds, aliphatic ethers are preferred, and dimethoxyethane and tetrahydrofuran are more preferred, from the viewpoint of obtaining higher ionic conductivity.

Examples of the ester compound include ester compounds such as aliphatic ester, alicyclic ester, heterocyclic ester, and aromatic ester, which can be used alone or in combination.

More specifically, examples of the aliphatic esters include formic acid esters such as methyl formate, ethyl formate, and triethyl formate; acetate esters such as methyl acetate, ethyl acetate, propyl acetate, isopropyl acetate, butyl acetate, and isobutyl acetate; propionate esters such as methyl propionate, ethyl propionate, propyl propionate, and butyl propionate; oxalate esters such as dimethyl oxalate and diethyl oxalate; malonic acid esters such as dimethyl malonate and diethyl malonate; and succinic acid esters such as dimethyl succinate and diethyl succinate.

The carbon number of the aliphatic ester is preferably 2 or more, more preferably 3 or more, and even more preferably 4 or more, and the upper limit is preferably 10 or less, more preferably 8 or less, and even more preferably 7 or less. The carbon number of the aliphatic hydrocarbon group in the aliphatic ester is preferably 1 or more and more preferably 2 or more, and the upper limit is preferably 6 or less, more preferably 4 or less, and even more preferably 3 or less.

Examples of the alicyclic esters include methyl cyclohexanecarboxylate, ethyl cyclohexanecarboxylate, dimethyl cyclohexanedicarboxylate, dibutyl cyclohexanedicarboxylate, and dibutyl cyclohexenedicarboxylate, and examples of the heterocyclic esters include methyl pyridinecarboxylate, ethyl pyridinecarboxylate, propyl pyridinecarboxylate, methyl pyrimidinecarboxylate, ethyl pyrimidinecarboxylate, and lactones such as acetolactone, propiolactone, butyrolactone, and valerolactone.

The carbon number of the alicyclic ester and heterocyclic ester is preferably 3 or more and more preferably 4 or more, and the upper limit is preferably 16 or less and more preferably 14 or less.

Examples of the aromatic esters include benzoic acid esters such as methyl benzoate, ethyl benzoate, propyl benzoate, and butyl benzoate; phthalate esters such as dimethyl phthalate, diethyl phthalate, dibutyl phthalate, butylbenzyl phthalate, and dicyclohexyl phthalate; and trimellitic acid esters such as trimethyl trimellitate, triethyl trimellitate, tripropyl trimellitate, tributyl trimellitate, and trioctyl trimellitate.

The carbon number of the aromatic ester is preferably 8 or more and more preferably 9 or more, and the upper limit is preferably 16 or less, more preferably 14 or less, and even more preferably 12 or less.

The ester compound used in the present embodiment may be substituted with a substituent such as an alkyl group, an alkenyl group, an alkoxyl group, a hydroxy group, a cyano group, or a halogen atom.

Among the above ester compounds, from the viewpoint of obtaining higher ionic conductivity, aliphatic esters are preferred, acetic esters are more preferred, and ethyl acetate is particularly preferred.

From the viewpoint of efficiently forming a complex, the amount of the complexing agent added is such that the molar ratio of the amount of the complexing agent added relative to the total molar amount of lithium atoms contained in the raw material-containing substance is preferably 0.1 or more and 2.0 or less, more preferably 0.5 or more and 1.5 or less, even more preferably 0.8 or more and 1.2 or less, and most preferably 1.0.

(Mixing)

In the producing method of the present embodiment, the solid electrolyte raw material described above and a complexing agent are mixed.

In the present embodiment, the shape of mixing the solid electrolyte raw material and the complexing agent may be mixed either solid form or liquid form, however since the solid electrolyte raw material contains solid and the complexing agent is liquid, it is usually mixed in a form in which a solid electrolyte raw material is present in a liquid complexing agent. Further, when mixing the raw materials and the complexing agent, a solvent may be further mixed as necessary. Hereinafter, in the description of the mixing of raw materials and complexing agents, unless otherwise specified, the complexing agent includes a solvent that is added as necessary.

There is no particular limitation on the method of mixing the solid electrolyte raw material and the complexing agent, and the solid electrolyte raw material and the complexing agent may be mixed by being introduced into a device capable of mixing the solid electrolyte raw material and the complexing agent. For example, when the solid electrolyte raw material is gradually added after supplying the complexing agent into a tank and activating stirring blades, a good mixing state of the solid electrolyte raw materials can be obtained and the dispersibility of the raw materials is improved, therefore it is preferred.

However, when using a halogen simple substance as a solid electrolyte raw material, the solid electrolyte raw material may not be solid, specifically, at room temperature and normal pressure, fluorine and chlorine are gases, and bromine is liquid. In such cases, for example, when the solid electrolyte raw material is a liquid, it may be supplied with the complexing agent into the tank separately from other solid electrolyte raw materials, and when the solid electrolyte raw material is a gas, it may be supplied by blowing into the complexing agent to which the solid electrolyte raw material, which is a solid, is added.

The producing method of the present embodiment is characterized that a solid electrolyte raw material and a complexing agent are mixed. In other words, since it is sufficient to mix the solid electrolyte raw material and the complexing agent and does not require pulverization, it can also be produced by a method which does not use equipment which is generally called as a grinder such as media type grinders including ball mill, bead mill, etc., and used for the purpose of pulverizing solid electrolyte raw materials. In the producing method of the present embodiment, by simply mixing the solid electrolyte raw material and the complexing agent, the solid electrolyte raw material contained in the raw material-containing substance and the complexing agent are mixed, and a complex, that is, an electrolyte precursor may be formed. In addition, in order to shorten the mixing time to obtain the complex or to make it finely powdered, the mixture of the raw material and the complexing agent may be pulverized with a grinder, however, as described above, it is preferable that a grinder is not used.

On the other hand, the electrolyte precursor may be pulverized by a grinder.

Examples of the devices for mixing the solid electrolyte raw material and the complexing agent, include a mechanical stirring type mixer equipped with stirring blades in a tank. Examples of the mechanical stirring type mixer include high-speed stirring mixers, double-arm mixers, high-speed stirring mixers are preferably used from the viewpoint of increasing the uniformity of the solid electrolyte raw material in the mixture of the solid electrolyte raw material and the complexing agent and obtaining higher ionic conductivity. Further, examples of the high-speed stirring type mixer include a vertical axis rotation type mixer, a horizontal axis rotation type mixer, and either type of mixer may be used.

Examples of the shape of the stirring blade used in the mechanical stirring type mixer include an anchor type, a blade type, an arm type, a ribbon type, a multi-stage blade type, a double-arm type, a shovel type, a twin-screw blade type, a flat blade type, and a C-blade type. From the viewpoint of improving the uniformity of the solid electrolyte raw material and obtaining higher ionic conductivity, a shovel type, a flat blade type, a C-blade type, etc. are preferable. Further, in a mechanical stirring type mixer, it is preferable to install a circulation line for discharging the object to be stirred outside the mixer and returning it to the inside of the mixer. By doing this, raw materials with heavy specific gravity such as lithium halide are stirred without settling or stagnation, and it becomes possible to mixing more uniformly.

The location of the circulation line to be installed is not particularly limited, however it is preferably installed at a location such that the object is discharged from the bottom of the mixer and returned to the top of the mixer. This makes it easier to uniformly stir the solid electrolyte raw material, which easily settles, on the convection caused by circulation. Furthermore, it is preferable that a return port is located below the surface of the liquid to be stirred. By doing so, it is possible to suppress the liquid to be stirred from splashing and adhering to the wall surface inside the mixer.

The temperature conditions for mixing the solid electrolyte raw material and the complexing agent are not particularly limited, and are, for example, -30 to 100 °C, preferably - 10 to 50°C, and more preferably around room temperature (23°C) (for example, approximately room temperature $\pm 5$ °C). The mixing time is about 0.1 to 150 hours, preferably 1 to 120 hours, more preferably 4 to 100 hours, and even more preferably 8 to 80 hours, from the viewpoint of mixing more uniformly and obtaining higher ionic conductivity.

By mixing the solid electrolyte raw material and the complexing agent, a complex is formed by the above solid electrolyte raw materials, etc., and the complexing agent. More specifically, the complex is considered to be formed by directly bonded to each other with and/or without a complexing agent, by an interaction of lithium atoms, sulfur atoms, phosphorus atoms, and halogen atoms contained in the solid electrolyte raw material and the complexing agent. That is, in the producing method of the present embodiment, the complex obtained by mixing the solid electrolyte raw material and the complexing agent can be said to be composed of the complexing agent, lithium atoms, sulfur atoms, phosphorus atoms, and halogen atoms.

The complex obtained in the present embodiment does not completely dissolve in the complexing agent which is a liquid and is usually solid, therefore a suspension in which the complexes are suspended, in the complex and the solvent which is added if necessary, can be obtained. Therefore, the method for producing a solid electrolyte of the present embodiment corresponds to a heterogeneous system in a so-called liquid phase method.

(Solvent)

In the present embodiment, a solvent may be further added when mixing the solid electrolyte raw material and the complexing agent.

When a complex which is a solid is formed in a liquid complexing agent, separation of components may occur when the complex is easily soluble in the complexing agent. Therefore, by using a solvent in which the complex does not dissolve, elution of components in the electrolyte precursor can be suppressed. In addition, by mixing the solid electrolyte raw material and the complexing agent using a solvent, complex formation is promoted and each main component can be more evenly present, and the dispersion state of the solid electrolyte raw material, especially an electrolyte precursor in which the dispersion state of halogen atoms is maintained uniformly, is obtained, therefore, as a result, the effect of obtaining high ionic conductivity is easily exhibited.

The method for producing a solid electrolyte of the present embodiment is a so-called heterogeneous method, and it is preferable that the complex does not completely dissolve in the liquid complexing agent and precipitates. The solubility of the complex can be adjusted by adding a solvent. In particular, since halogen atoms are easily eluted from the complex, the desired complex can be obtained by suppressing the halogen atoms from eluting by adding a solvent. As a result, a sulfide solid electrolyte having high ionic conductivity can be easily obtained through an electrolyte precursor in which components such as solid electrolyte raw materials, particularly solid electrolyte raw materials, etc. containing halogen atoms, are uniformly dispersed.

As the solvent having such properties, a solvent having a solubility parameter of 10 or less is preferred. In the description herein, the solubility parameter is described in various documents, such as "Chemistry Handbook" (published in 2004, revised 5th edition, Maruzen Co., Ltd.), and is a value $\delta$ ($(call/cm^3)^{1/2}$) calculated by the following formula (1), which is also called Hildebrand parameter or SP value.

$$\delta = \sqrt{(\Delta H - RT)/V} \qquad (1)$$

(In formula (1), $\Delta H$ is a molar heat generation, R is a gas constant, T is a temperature, and V is a molar volume).

By using a solvent with a solubility parameter of 10 or less, compared to the above-described complexing agent, solid electrolyte raw materials, especially raw materials containing halogen atoms such as halogen atoms and lithium halide, and furthermore, component containing halogen atoms constituting the complex (for example, an aggregate of lithium halide and a complexing agent), etc. can be in a state where they are more difficult to dissolve relatively. Therefore, in the complex, particularly the halogen atoms become easily fixed and the halogen atoms are present in a good dispersed state in the obtained electrolyte precursor and even in the solid electrolyte, making it possible to obtain a solid electrolyte having high ionic conductivity. That is, it is preferable that the solvent used in the present embodiment has a property in which the complex does not dissolve. From the same viewpoint, the solubility parameter of the solvent is preferably 9.5 or less, more preferably 9.0 or less, and even more preferably 8.5 or less.

More specifically, as the solvent used in the present embodiment, it is possible to widely adopt solvents that have been conventionally used in the production of solid electrolytes, for example, the examples include hydrocarbon solvents such as aliphatic hydrocarbon solvents, alicyclic hydrocarbon solvents, aromatic hydrocarbon solvents; alcohol-based solvents, ester-based solvents, aldehyde-based solvents, ketone-based solvents, ether-based solvents having 4 or more carbon atoms on one side, solvents containing carbon atoms such as solvents containing carbon atoms and heteroatoms. Among these, it is preferable to be appropriately selected and used from those having a solubility parameter within the above range.

More specifically, examples include aliphatic hydrocarbon solvents such as hexane (7.3), pentane (7.0), 2-ethylhexane, heptane (7.4), octane (7.5), decane, undecane, dodecane, and tridecane: alicyclic hydrocarbon solvents such as cyclohexane (8.2) and methylcyclohexane: aromatic hydrocarbon solvents such as benzene, toluene (8.8), xylene (8.8), mesitylene, ethylbenzene (8.8), tert-butylbenzene, trifluoromethylbenzene, nitrobenzene, chlorobenzene (9.5), chlorotoluene (8.8), and bromobenzene; alcohol-based solvents such as ethanol (12.7) and butanol (11.4); aldehyde-based solvents such as formaldehyde, acetaldehyde (10.3) and dimethylformamide (12.1); ketone-based solvents such as acetone (9.9) and methyl ethyl ketone; ether-based solvents such as dibutyl ether, cyclopentyl methyl ether (8.4), tert-butyl methyl ether, and anisole; and solvents containing carbon atoms and heteroatoms such as acetonitrile (11.9), dimethyl sulfoxide, and carbon disulfide. Note that the numerical value in parentheses in the above example is the SP value.

Moreover, the above-described illustrations are just examples, and for example, those having isomers may include all isomers. Further, as long as it is a halogen atom-substituted solvent, an alicyclic hydrocarbon solvent, or an aromatic hydrocarbon solvent, it may also include, for example, a substituted aliphatic group such as an alkyl group.

Among these solvents, aliphatic hydrocarbon solvents, alicyclic hydrocarbon solvents, aromatic hydrocarbon solvents, and ether-based solvents are preferred, and from the viewpoint of obtaining high ionic conductivity more stably, heptane, cyclohexane, toluene, ethylbenzene, diethyl ether, diisopropyl ether, dibutyl ether, dimethoxyethane, cyclopentyl methyl ether, tert-butyl methyl ether, and anisole are more preferred, diethyl ether, diisopropyl ether, and dibutyl ether are even more preferred, diisopropyl ether and dibutyl ether are further more preferred, and cyclohexane is particularly preferred. The solvent used in the present embodiment is preferably the organic solvent exemplified above, and is an organic solvent different from the complexing agent described above. In the present embodiment, these solvents may be used alone or in combination of a plurality of kinds.

[Drying]

The producing method of the present embodiment may contain drying the electrolyte precursor-containing substance after obtaining the electrolyte precursor-containing substance.

In removing the complexing agent, by heating the electrolyte precursor obtained by drying the electrolyte precursor-containing substance in a high boiling point solvent, the electrolyte precursor can be heated more directly, therefore it becomes possible to separate and remove the complexing agent more efficiently.

Examples of the drying method include filtration using a glass filter, etc., solid-liquid separation by decantation, and solid-liquid separation using a centrifuge. For the solid-liquid separation, specifically, decantation to remove the supernatant complexing agent and the solvent which is optionally added after the suspension is transferred to a container and the solid is precipitated, furthermore, for example, filtration using a glass filter with a pore size of about 10 to 200 $\mu$m, preferably 20 to 150 $\mu$m, is easy.

Moreover, it can also be dried by heating using a dryer, etc. Drying of the electrolyte precursor-containing substance may be performed under any pressure condition, such as increased pressure, normal pressure, or reduced pressure, and is preferably performed under normal pressure or reduced pressure. In particular, considering drying at a lower temperature, it is preferable to dry using a vacuum pump, etc., under reduced pressure or even under vacuum.

The temperature conditions for drying may be a temperature equal to or higher than the boiling point of the solvent. Specific temperature conditions cannot be determined completely since they may change depending on the type of complexing agent and solvent used, however preferably at 5°C or higher, more preferably at 10°C or higher, and even more preferably at 15°C or higher, and the upper limit is preferably 110°C or lower, more preferably 85°C or lower, and even more preferably 70°C or lower.

In addition, as for the pressure conditions, as described above, it is preferable to be under normal pressure or reduced pressure, and in the case of reduced pressure, specifically, preferably 85 kPa or less, more preferably 80 kPa or less, and even more preferably 70 kPa or less. The lower limit may be a vacuum (0 kPa), and considering ease of pressure adjustment, it is preferably 1 kPa or more, more preferably 2 kPa or more, and even more preferably 3 kPa or more.

In the producing method of the present embodiment, when drying is performed, drying may be performed while heating after performing the solid-liquid separation.

Further, in the producing method of the present embodiment, drying may or may not be performed. That is, in the producing method of the present embodiment, the object to be heated in a high boiling point solvent may be an electrolyte precursor-containing substance, or may be an electrolyte precursor obtained by drying. As described above, since the electrolyte precursor can be heated more directly, the electrolyte precursor is preferable as the object to be heated.

[Heating in the solvent]

The producing method of the present embodiment contains:
obtaining the electrolyte precursor-containing substance, and then heating in a solvent having a boiling point which is higher than the boiling point of the complexing agent.

By heating the electrolyte precursor-containing substance obtained by obtaining the electrolyte precursor-containing substance, and the electrolyte precursor when performing the drying, in the high boiling point solvent, the complexing agent is removed from the electrolyte precursor, that is, the complexing agent is removed from the complex which is formed by the solid electrolyte raw materials, etc. and the complexing agent, to obtain the sulfide solid electrolyte. This phenomenon can be called "complex decomposition" since the complex (electrolyte precursor) is decomposed, and also be called "decomplexation" since the complexing agent is removed from the complex (electrolyte precursor).

(Solvent having a boiling point which is higher than the boiling point of the complexing agent)

The solvent having a boiling point which is higher than the boiling point of the complexing agent (high boiling point solvent) used in the producing method of the present embodiment is not particularly limited as long as it has a boiling point which is higher than the boiling point of the complexing agent contained in the electrolyte precursor. However, as described above, considering that solvents having heteroatoms easily form complexes with solid electrolyte raw materials, it is preferable that the high boiling point solvent is a hydrocarbon solvent which does not contain heteroatoms.

As the hydrocarbon solvent, a solvent having a boiling point which is higher than the boiling point of the complexing agent may be selected from among the organic solvents exemplified as solvents that can be used in obtaining the above-described electrolyte precursor-containing substance, and it is preferably an aliphatic hydrocarbon solvent, alicyclic hydrocarbon solvents, and aromatic hydrocarbon solvents, and more preferably aliphatic hydrocarbon solvents and alicyclic hydrocarbon solvents.

As the carbon number of the high boiling point solvent, considering it easily has a boiling point which is higher than the boiling point of the complexing agent, it is preferably an aliphatic hydrocarbon solvent having 8 or more and more preferably 9 or more, and as the upper limit, it is preferably 24 or less, more preferably 20 or less, and even more preferably 16 or less.

Examples of the aliphatic hydrocarbon solvents preferably used as high boiling point solvents include aliphatic hydrocarbon solvents such as octane, 2-ethylhexane, decane, undecane, dodecane, and tridecane. Note that these examples are just examples, and 2-ethylhexane is an isomer of octane, however those having isomers in this way may include all isomers. It may also include those substituted with halogen atoms such as perfluorooctane.

In addition, as the alicyclic hydrocarbon solvents preferably used as high boiling point solvents include cyclopentane-based hydrocarbon solvents such as trimethylcyclopentane (C8, 105°C), methylethylcyclopentane (C8, 149°C), propylcyclopentane (C8, unknown), and butylcyclopentane (C9, 157°C); cyclohexane-based hydrocarbon solvents such as dimethylcyclohexane (C8, 118 to 120 °C), ethylcyclohexane (C8, 130 to 132 °C), propylcyclohexane (C9, 155 °C), isopropylcyclohexane (C9, 155 °C), and butylcyclohexane (C10, 178 to 180 °C); cycloheptane-based hydrocarbon solvents such as methylcycloheptane (C8, 145°C) and ethylcycloheptane (C9, 145°C); cyclooctane-based hydrocarbon solvents such as cyclooctane (C8, 151°C) and dimethylcyclooctane (C10, 158 to 159°C); cyclononane, and cyclodecane are representative and preferred. Note that these examples are just examples, and for example, those having isomers such as isopropylcyclohexane for propylcyclohexane may include all isomers. Further, as long as it is a halogen atom-substituted solvent and an alicyclic hydrocarbon solvent, it may also include, for example, a substituted aliphatic group such as an alkyl group.

The high boiling point solvent may be used singly or in combination of two or more of the above-described examples.

(Heating)

In the producing method of the present embodiment, the electrolyte precursor-containing substance, and the electrolyte precursor when performing the above-described drying (hereinafter, these are also collectively referred to as "electrolyte precursor-containing substance, etc.") are heated in a high boiling point solvent. By doing this, the complexing agent can be removed from the electrolyte precursor.

The heating conditions of the high boiling point solvent are not particularly limited as long as it is heated to such an extent that the complexing agent becomes easy to flow, to be separated from the electrolyte precursor, and to be removed.

As the heating temperature of the high boiling point solvent, it cannot be determined completely since it can change depending on the pressure conditions, therefore, when based on the boiling point of the complexing agent, it is preferably -50°C or higher with respect to the boiling point of the complexing agent, from the viewpoint of removing the complexing agent more efficiently, it is preferably 0°C (that is, the boiling point of the complexing agent) or higher, and more preferably higher than 0°C (that is, the boiling point of the complexing agent). In addition, from the viewpoint of removing the complexing agent more stably, it is preferably 1°C or higher, more preferably 3°C or higher, even more preferably 5°C or higher, and further more preferably 10°C or higher, with respect to the boiling point of the complexing agent.

In the heating conditions of the high boiling point solvent described above, it is effective to be the temperature which is higher than the boiling point of the complexing agent, from the viewpoint of more efficient removal of the complexing agent. This is because by heating to a temperature which is higher than the boiling point of the complexing agent, as described above, by heating the high boiling point solvent to a temperature which is higher than the boiling point of the complexing agent, the complexing agent is volatilized, and therefore it becomes easier to separate from the electrolyte precursor.

Furthermore, as the heating conditions of the high boiling point solvent, it is preferable to boil the high boiling point solvent. That is, the high boiling point solvent is preferably heated to the boiling point of the high boiling point solvent or higher. By boiling the high boiling point solvent, as described above, not only does the complexing agent become easier to separate from the electrolyte precursor, but it is also discharged from the system together with the gas having high-boiling point solvent which is generated when the high-boiling point solvent boils, therefore, rapid separation is facilitated.

As the heating conditions of the high boiling point solvent, it cannot be determined completely since it can change depending on the pressure conditions, as described above, it is preferably 60°C or higher, more preferably 65°C or higher, even more preferably 70°C or higher, and further more preferably 75°C or higher, and the upper limit is preferably 130°C or lower, more preferably 120°C or lower, and even more preferably 115°C or lower. When heating within the above temperature range, the removal of the complexing agent can be performed efficiently.

Regarding the heating conditions of the high boiling point solvent, the pressure condition is preferably 100 kPa or less, more preferably 85 kPa or less, and even more preferably 70 kPa or less, and the lower limit may be vacuum (0 kPa), considering the ease of adjustment of the pressure, it is preferably 1 kPa or more, more preferably 2 kPa or more, and even more preferably 3 kPa or more. When the pressure conditions are within the above range, the heating conditions can be made mild and it is possible to suppress increasing size of the equipment.

(Method for heating)

A method for heating the electrolyte precursor-containing substance, etc., in the high boiling point solvent is not particularly limited as long as it is heated in the high boiling point solvent, for example, the electrolyte precursor-containing substance, etc., may be supplied into a heated high boiling point solvent, or the electrolyte precursor-containing substance, etc., may be supplied into the high boiling point solvent and then heated.

Further, for example, a high boiling point solvent may be prepared separately from a high boiling point solvent for heating, and an electrolyte precursor-containing substance, etc., may be mixed with the separately prepared high boiling point solvent, and this mixture may be added into the high boiling point solvent used for heating the electrolyte precursor-containing substance, etc.

In this case, the mixture may be added to a heated high boiling point solvent used for heating the electrolyte precursor-containing substance, etc., or may be added to a boiled solvent. Further, the mixture may be heated after being added to a high boiling point solvent used for heating the electrolyte precursor-containing substance, etc., or may be heated to boil. In either case, from the viewpoint of removing the complexing agent more efficiently, the high boiling point solvent used for heating is preferably boiled.

The content of the electrolyte precursor in the mixture of the electrolyte precursor-containing substance, etc. and the separately prepared high boiling point solvent is, based on the total amount of the mixture, preferably 1% by mass or more, more preferably 5% by mass or more, even more preferably 10% by mass or more, and further more preferably 20% by mass or more, and the upper limit is preferably 50% by mass or less and more preferably 40% by mass or less. When the content is within the above range, the mixture becomes easy to handle and becomes easier to be added into the high boiling point solvent used for heating.

As the high boiling point solvent prepared separately from the high boiling point solvent for heating (the high boiling point solvent used to form the mixture containing the electrolyte precursor), it may be appropriately selected from the solvents exemplified as the high boiling point solvent for heating above, the same type of solvent as the high boiling point solvent for heating may be used, or a different type of solvent may be used. From the viewpoint of more efficiently obtaining a sulfide solid electrolyte having few impurities, high quality, and high ionic conductivity, it is preferable to use the same type of solvent. When the same type of solvent is used, it becomes easy to recirculate and use the solvent by separation and purification treatment.

In the producing method of the present embodiment, the amount of the high boiling point solvent for heating used is, preferably 20 mL or more, more preferably 100 mL or more, and even more preferably 150 mL or more, and the upper limit is preferably 2000 mL or less, more preferably 1500 mL or less, and even more preferably 1000 mL or less, relative to 1 g of supplied amount of electrolyte precursor contained in the electrolyte precursor-containing substance. When the amount of high boiling point solvent for heating used is within the above range, a sulfide solid electrolyte having few impurities, high quality, and high ionic conductivity can be obtained more efficiently, and disposal of the solvent becomes also easier.

Since the high boiling point solvent for heating is heated itself, a part of it may volatilize and decrease. On the other hand, it can also be said that it is preferable that the amount of the high boiling point solvent for heating used is greater than a certain amount relative to the amount of the electrolyte precursor supplied. In the producing method of the present embodiment, when the high boiling point solvent decreases during heating, it is preferable to add the high boiling point solvent. By adding a high boiling point solvent, the reduced high boiling point solvent can be supplemented, and a sulfide solid electrolyte having few impurities, high quality, and high ionic conductivity can be obtained more efficiently.

The method for adding the high boiling point solvent is not particularly limited, and as described above, for example, the high boiling point solvent may be added alone, or it may also be added as a mixture of the high boiling solvent to be added and the electrolyte precursor-containing substance.

(Content of Complexing agent)

By heating in the above solvent, the complexing agent can be removed from the electrolyte precursor, and the electrolyte precursor becomes an amorphous sulfide solid electrolyte, however all of the complexing agent may not be removed from the electrolyte precursor, resulting that in some cases, the complexing agent may be remain in the amorphous sulfide solid electrolyte. In this case, the content of the complexing agent contained in the sulfide solid electrolyte is preferably 0% by mass, that is, it is preferably that no complexing agent is contained at all, however from obtaining a sulfide solid electrolyte having high ionic conductivity efficiently, it is usually 20% by mass or less, further 17.5% by mass or less, 15% by mass or less, or 10% by mass or less, and the lower limit is about 0.1% by mass or more.

Also, high boiling point solvents may remain, as well as complexing agents. In this case, the content of the high boiling point solvent is also the same as the numerical range of the content of the complexing agent.

(Constant rate drying term and decreasing rate drying term)

Heating in the solvent of the producing method of the present embodiment can be classified into two periods based on the temperature of the electrolyte precursor and the state of removal of the complexing agent.

The first is a constant rate drying term in which the entire surface of the powder of the electrolyte precursor is covered with the complexing agent, the surface and center temperatures of the electrolyte precursor are kept the same, and the amount of complexing agent contained in the electrolyte precursor decreases linearly with time. During the constant rate drying term, the complexing agent contained in the electrolyte precursor reaches its limit content, and the content of the complexing agent usually decreases to about 25% by mass.

The second is a decreasing rate drying term in which after the constant rate drying term, the surface temperature of the electrolyte precursor rises to the temperature of the high boiling point solvent, and the center temperature of the powder also gradually increases and finally approaches the temperature of the high boiling point solvent. During the decreasing rate drying term, the complexing agent contained in the electrolyte precursor reaches an equilibrium content, and the content of the complexing agent does not decrease any further at this temperature. The content of the complexing agent contained in the electrolyte precursor which passed through the decreasing rate drying term, decreases to the numerical range described as the content of the complexing agent contained in the sulfide solid electrolyte described above.

In the producing method of the present embodiment, heating in a solvent is preferably performed by heating in a high boiling point solvent, however, part of the heating in the solvent may be performed by heating in a high boiling point solvent. When part of the heating in the solvent is performed by heating in a high boiling point solvent, it is preferable to perform the heating in the high boiling point solvent at least during the constant rate drying term.

The time of the constant rate drying term cannot be determined completely since it changes depending on the type and content of the complexing agent contained in the electrolyte precursor, however it is, after heating in the solvent is started, usually 10 minutes or more and preferably 45 minutes or more, and the upper limit is usually 1 hour and 30 minutes or less and more preferably 1 hour and 15 minutes or less.

Further, the time of the decreasing rate drying term is usually 10 minutes or more and preferably 45 minutes or more, and the upper limit is usually 6 hours or less, preferably 5 hours or less, and more preferably 4 hours or less.

[Heating]

The producing method of the present embodiment can contain, after heating in the solvent, further heating at a temperature which is higher than the heating temperature in the heating in the solvent. By heating in the solvent, an amorphous sulfide solid electrolyte can be obtained from the electrolyte precursor. When attempting to obtain a crystalline sulfide solid electrolyte, by further heating at a higher temperature than the heating temperature of heating in a solvent (hereinafter also referred to as "post-heating"), the amorphous sulfide solid electrolyte can be made into a crystalline sulfide solid electrolyte.

Further, a complexing agent and a high boiling point solvent may remain in the amorphous sulfide solid electrolyte obtained by heating in the above solvent. Further, by post-heating, the content of the complexing agent and the high boiling point solvent remaining in the amorphous sulfide solid electrolyte is reduced, therefore the quality of the sulfide solid electrolyte is improved and it becomes easy to obtain high ionic conductivity. In addition, by heating in the above solvent, in some cases, it may not become an amorphous sulfide solid electrolyte and remain as an electrolyte precursor. In this case, by post-heating, the complexing agent can be removed from the electrolyte precursor, and a crystalline sulfide solid electrolyte can be obtained via an amorphous sulfide solid electrolyte.

The heating temperature is not particularly limited as long as it is higher than the heating temperature for heating in a solvent, for example, the heating temperature may be determined depending on the structure of the crystalline solid electrolyte obtained by heating the amorphous sulfide solid electrolyte obtained by removing the complexing agent from the electrolyte precursor. Specifically, the amorphous solid electrolyte may be subjected to differential thermal analysis (DTA) using a differential thermal analysis device (DTA device) at a condition of increasing temperature of 10 °C/min, and it may be set under preferably 5°C or higher, more preferably 10°C or higher, and even more preferably 20°C or higher, and the upper limit is not particularly limited, however it may be about 40°C or lower, starting from the temperature at the top of the exothermic peak observed on the lowest temperature side. By setting under such a temperature range, not only can a crystalline solid electrolyte be obtained more efficiently and reliably, but also the content of the complexing agent and the high boiling point solvent remaining in the sulfide solid electrolyte can be reduced, and by reducing the content of the electrolyte precursor, the purity of the sulfide solid electrolyte can also be improved.

The heating temperature cannot be determined completely since it changes depending on the structure of the crystalline solid electrolyte to be obtained, however it is usually preferably 130°C or higher, more preferably 140°C or higher, and even more preferably 150°C or higher, and the upper limit is not particularly limited, however it is preferably 300°C or lower, more preferably 280°C or lower, and even more preferably 250°C or lower.

The heating time is not particularly limited as long as the desired crystalline solid electrolyte can be obtained, however for example, it is preferably 1 minute or more, more preferably 10 minutes or more, even more preferably 30 minutes or more, and further more preferably 1 hour or more. Further, the upper limit of the heating time is not particularly limited, however it is preferably 24 hours or less, more preferably 10 hours or less, even more preferably 5 hours or less, and further more preferably 3 hours or less.

Heating can also be performed at normal pressure, but in order to reduce the heating temperature, it can also be performed in a reduced pressure atmosphere, or even in a vacuum atmosphere.

Regarding the pressure condition, when heating under the reduced pressure atmosphere, it is preferably 85 kPa or less, more preferably 80 kPa or less, and even more preferably 70 kPa or less, and the lower limit may be vacuum (0 kPa), considering the ease of adjustment of the pressure, it is preferably 1 kPa or more, more preferably 2 kPa or more, and even more preferably 3 kPa or more. When the pressure conditions are within the above range, the heating conditions can be made mild and it is possible to suppress increasing size of the equipment.

Further, the heating is preferably performed in an inert gas atmosphere (for example, nitrogen atmosphere, argon atmosphere). This is because deterioration (for example, oxidation) of the crystalline solid electrolyte can be prevented.

The heating method is not particularly limited, however, examples thereof include methods using a hot plate, a vacuum heating device, an argon gas atmosphere furnace, and a firing furnace. Further, industrially, a horizontal dryer, a horizontal vibrating fluidized dryer, etc. having a heating means and a feed mechanism may be used, and they may be selected depending on the processing amount to be heated.

Post-heating can also be performed in a high boiling point solvent. The heating temperature during post-heating (crystallization) is higher than the heating temperature during heating in the above solvent. Therefore, after the complexing agent is removed by heating in a solvent, by restoring the pressure using an inert gas, etc., it becomes possible to heat in a boiling state at a predetermined temperature. This allows heating in a solvent and crystallization by post-heating to be performed continuously in the same device, resulting in a very efficient heating method.

(Amorphous sulfide solid electrolyte)

The sulfide solid electrolyte obtained by the producing method of the present embodiment is any of an amorphous sulfide solid electrolyte and a crystalline sulfide solid electrolyte as desired as described above.

The amorphous sulfide solid electrolyte obtained by the producing method of the present embodiment contains lithium atoms, sulfur atoms, phosphorus atoms, and halogen atoms, and representative examples thereof preferably include solid electrolytes composed of lithium sulfide, phosphorus sulfide, and a lithium halide, for example, $Li_2S$-$P_2S_5$-LiI, $Li_2S$-$P_2S_5$-LiCl, $Li_2S$-$P_2S_5$-LiBr, and $Li_2S$-$P_2S_5$-LiI-LiBr; and solid electrolytes further containing other atoms such as oxygen atoms and silicon atoms, for example, $Li_2S$-$P_2S_5$-$Li_2O$-LiI and $Li_2S$-$SiS_2$-P2Ss-LiI. From the viewpoint of obtaining higher ionic conductivity, solid electrolytes composed of lithium sulfide, phosphorus sulfide, and a lithium halide, such as

$Li_2S$-$P_2S_5$-LiI, $Li_2S$-$P_2S_5$-LiCl, $Li_2S$-$P_2S_5$-LiBr, and $Li_2S$-$P_2S_5$-LiI-LiBr, are preferred.

The types of atoms constituting the amorphous sulfide solid electrolyte can be confirmed by, for example, an ICP emission spectrophotometer.

When the amorphous sulfide solid electrolyte obtained by the producing method of the present embodiment has at least $Li_2S$-$P_2S_5$, the molar ratio of $Li_2S$ and $P_2S_5$ is preferably 65 to 85:15 to 35 from the viewpoint of obtaining higher ionic conductivity, more preferably 70 to 80:20 to 30, and even more preferably 72 to 78:22 to 28.

When the amorphous sulfide solid electrolyte obtained by the producing method of the present embodiment is, for example, $Li_2S$-$P_2S_5$-LiI-LiBr, the total content of lithium sulfide and diphosphorus pentasulfide is preferably 60 to 95 mol%, more preferably 65 to 90 mol%, and even more preferably 70 to 85 mol%. Further, the ratio of lithium bromide relative to the total of lithium bromide and lithium iodide is preferably 1 to 99 mol%, more preferably 20 to 90 mol%, even more preferably 40 to 80 mol%, and particularly preferably 50 to 70 mol%.

In the amorphous sulfide solid electrolyte obtained by the producing method of the present embodiment, the blending ratio (molar ratio) of lithium atoms, sulfur atoms, phosphorus atoms, and halogen atoms is preferably 1.0 to 1.8:1.0 to 2.0:0.1 to 0.8:0.01 to 0.6, more preferably 1.1 to 1.7:1.2 to 1.8:0.2 to 0.6:0.05 to 0.5, and even more preferably 1.2 to 1.6: 1.3 to 1.7: 0.25 to 0.5: 0.08 to 0.4. Further, when bromine and iodine are used together as halogen atoms, the blending ratio (molar ratio) of lithium atoms, sulfur atoms, phosphorus atoms, bromine, and iodine is preferably 1.0 to 1.8: 1.0 to 2. 0: 0.1 to 0.8: 0.01 to 0.3: 0.01 to 0.3, more preferably 1.1 to 1.7: 1.2 to 1.8: 0.2 to 0. 6:0.02 to 0.25:0.02 to 0.25, even more preferably 1.2 to 1.6:1.3 to 1.7:0.25 to 0.5:0.03 to 0.2:0.03 to 0.2, and further more preferably 1.35 to 1.45:1.4 to 1.7:0.3 to 0.45:0.04 to 0.18:0.04 to 0.18. By setting the blending ratio (molar ratio) of lithium atoms, sulfur atoms, phosphorus atoms, and halogen atoms within the above range, it becomes easier to obtain a solid electrolyte with higher ionic conductivity having a thio-LISICON Region II type crystal structure described below.

The shape of the amorphous sulfide solid electrolyte is not particularly limited, and examples thereof include a particle shape.

The average particle diameter ($D_{50}$) of the particle shaped amorphous sulfide solid electrolyte is, for example, 0.01 μm or more, further 0.03 μm or more, 0.05 μm or more, and 0.1 μm or more, and the upper limit is 5 μm or less, further 3.0 μm or less, 1.5 μm or less, 1.0 μm or less, and 0.5 μm or less. As described above, a jacket type heater (such as a vibration dryer) that has been conventionally used for removing complexing agents and heating for crystallization is not used in the producing method of the present embodiment to obtain a sulfide solid electrolyte, therefore the generation of secondary particles due to aggregation of primary particles is suppressed, and the average particle diameter becomes small as the above range.

Therefore, in the producing method of the present embodiment, there is no need to perform pulverization (atomization) treatment.

(Crystalline Sulfide Solid Electrolyte)

The crystalline sulfide solid electrolyte obtained by the producing method of the present embodiment may be a so-called glass ceramic obtained by heating an amorphous sulfide solid electrolyte to a crystallization temperature or higher, and examples of its crystal structure include a $Li_3PS_4$ crystal structure, a $Li_4P_2S_6$ crystal structure, a $Li_7PS_6$ crystal structure, a $L_{17}P_3S_{11}$ crystal structure, and a crystal structure having peaks in the vicinity of $2\theta = 20.2°$ and in the vicinity of 23.6° (for example, JP 2013-16423 A).

Examples also include a $Li_{4-x}Ge_{1-x}P_xS_4$ system thio-LISICON Region II type crystal structure (see Kanno et al., Journal of The Electrochemical Society, 148 (7) A742-746 (2001)), and a crystal structure similar to the $Li_{4-x}Ge_{1-x}P_xS_4$ system thio-LISICON Region II type (see Solid State Ionics, 177 (2006), 2721-2725) can also be exemplified. The crystal structure of the crystalline sulfide solid electrolyte obtained by the producing method of the present embodiment is preferably the thio-LISICON Region II type crystal structure, among above, from the viewpoint of obtaining higher ionic conductivity. Herein, the term "thio-LISICON Region II type crystal structure" refers to either a $Li_{4-x}Ge_{1-x}P_xS_4$ system thio-LISICON Region II type crystal structure or a crystal structure similar to the $Li_{4-x}Ge_{1-x}P_xS_4$ system thio-LISICON Region II type.

The crystalline sulfide solid electrolyte obtained by the producing method of the present embodiment may contain the thio-LISICON Region II type crystal structure, or may contain the thio-LISICON Region II type crystal structure as a main crystal, but from the viewpoint of obtaining higher ionic conductivity, it is preferable that the crystalline sulfide solid electrolyte contains the thio-LISICON Region II type crystal structure as a main crystal. In the description herein, "containing as a main crystal" means that the proportion of the target crystal structure in the crystal structure is 80% or more, and the proportion is preferably 90% or more, and more preferably 95% or more. In addition, from the viewpoint of obtaining higher ionic conductivity, it is preferable that the crystalline sulfide solid electrolyte obtained by the producing method of the present embodiment does not contain crystalline $Li_3PS_4$ ($\beta$-$Li_3PS_4$).

In the X-ray diffractometry using CuKa line, the diffracted peak of the $Li_3PS_4$ crystal structure appears, for example, in the vicinity of $2\theta = 17.5°$, 1 8.3°, 26.1°, 27.3°, and 30.0°, the diffracted peak of the $Li_4P_2S_6$ crystal structure

appears, for example, in the vicinity of $2\theta = 16.9°$, $27.1°$, and $32.5°$, the diffraction peak of the $Li_7PS_6$ crystal structure appears, for example, in the vicinity of $2\theta = 15.3°$, $25.2°$, $29.6°$, and $31.0°$, the diffraction peak of the $Li_7P_3S_{11}$ crystal structure appears, for example, in the vicinity of $2\theta = 17.8°$, $18.5°$, $19.7°$, $21.8°$, $23.7°$, $25.9°$, $29.6°$, and $30.0°$, the diffraction peak of the $Li_{4-x}Ge_{1-x}P_xS_4$ system thio-LISICON Region II type crystal structure appears, for example, in the vicinity of $2\theta = 20.1°$, $23.9°$, and $29.5°$, and the diffraction peak of the crystal structure similar to the $Li_{4-x}Ge_{1-x}P_xS_4$ system thio-LISICON Region II type appears, for example, in the vicinity of $2\theta = 20.2°$ and $23.6°$. Note that these peak positions may be shifted back and forth within a range of $\pm 0.5°$.

A crystalline sulfide solid electrolyte having the Argyrodite type crystal structure having the structural skeleton of the above-described $Li_7PS_6$, in which a part of P is substituted with Si, is also preferred.

Examples of the compositional formulas of the Argyrodite type crystal structure include crystal structures represented by the compositional formulas $Li_{7-x}P_{1-y}Si_yS_6$ and $Li_{7+x}P_{1-y}Si_yS_6$ (x is -0.6 to 0.6, y is 0.1 to 0.6). The Argyrodite type crystal structure represented by this compositional formula is a cubic or orthorhombic, preferably a cubic crystal, and has peaks mainly appearing at positions of $2\theta = 15.5°$, $18.0°$, $25.0°$, $30.0°$, $31.4°$, $45.3°$, $47.0°$, and $52.0°$ in X-ray diffractometry using CuKa line.

Examples of the compositional formulas of the Argyrodite type crystal structure include a compositional formula of $Li_{7-x-2y}PS_{6-x-y}Cl_x$ ($0.8 \le x \le 1.7$, $0 < y \le -0.25x+0.5$). The Argyrodite type crystal structure represented by this compositional formula is preferably a cubic crystal, and has peaks mainly appearing at positions of $2\theta = 15.5°$, $18.0°$, $25.0°$, $30.0°$, $31.4°$, $45.3°$, $47.0°$, and $52.0°$ in X-ray diffractometry using CuKα line.

Further, examples of the compositional formulas of the Argyrodite type crystal structure include a compositional formula of $Li_{7-x}PS_{6-x}Ha_x$ (Ha is Cl or Br, x is preferably 0.2 to 1.8). The Argyrodite type crystal structure represented by this compositional formula is preferably a cubic crystal, and has peaks mainly appearing at positions of $2\theta = 15.5°$, $18.0°$, $25.0°$, $30.0°$, $31.4°$, $45.3°$, $47.0°$, and $52.0°$ in X-ray diffractometry using CuKα line.

Note that these peak positions may be shifted back and forth within a range of $\pm 0.5°$.

By further heating after the removing, the content of the complexing agent contained in the crystalline sulfide solid electrolyte becomes smaller than the content of the complexing agent contained in the amorphous sulfide solid electrolyte.

The content of the complexing agent contained in the crystalline sulfide solid electrolyte is preferably 0% by mass, that is, it is preferably that no complexing agent is contained at all, however from obtaining a sulfide solid electrolyte having high ionic conductivity efficiently, it is usually 10% by mass or less, further 8% by mass or less, 5% by mass or less, 3 % by mass or less, and 1 % by mass or less, and the lower limit is about 0.01% by mass or more.

Also, high boiling point solvents may remain, as well as complexing agents. In this case, the content of the high boiling point solvent is also the same as the numerical range of the content of the complexing agent.

In the description herein, for the content of the complexing agent and high boiling point solvent contained in the sulfide solid electrolyte, the powder obtained in Examples etc. is dissolved in a mixture of water and pentanol, and measured using a gas chromatography device (GC), and the complexing agent and the high boiling point solvent were quantified using an absolute calibration curve (GC calibration method).

The shape of the crystalline sulfide solid electrolyte is not particularly limited, however it may be, for example, particle shape.

The average particle diameter ($D_{50}$) of the particle shaped crystalline solid electrolyte is, for example, 0.01 μm or more, further 0.03 μm or more, 0.05 μm or more, and 0.1 μm or more, and the upper limit is 5 μm or less, further 3.0 μm or less, 1.5 μm or less, 1.0 μm or less, and 0.5 μm or less. As described above, a jacket type heater (such as a vibration dryer) that has been conventionally used for removing complexing agents is not used in the producing method of the present embodiment to obtain a sulfide solid electrolyte,, therefore the generation of secondary particles due to aggregation of primary particles is suppressed, and the average particle diameter becomes small as the above range.

Therefore, in the producing method of the present embodiment, there is no need to perform pulverization (atomization) treatment.

Further, the specific surface area of the sulfide solid electrolyte obtained by the producing method of the present embodiment is usually 10 $m^2/g$ or more, further 15 $m^2/g$ or more, 20 $m^2/g$ or more, or 25 $m^2/g$ or more. The upper limit is not particularly limited, and for example, about 50 $m^2/g$ or less. In the description herein, the specific surface area is a value measured by the BET method (gas adsorption method), and nitrogen may be used as the gas (nitrogen method), krypton also may be used as the gas (krypton method), it is appropriately selected and measured depending on the size of the specific surface area.

[Sulfide Solid Electrolyte]

A sulfide solid electrolyte of the present embodiment contains:

lithium atoms, phosphorus atoms, sulfur atoms, halogen atoms, a complexing agent, and a solvent having a boiling point which is higher than the boiling point of the complexing agent;

in which the particle size distribution measured by laser diffraction scattering type particle size distribution analysis has a peak at a peak position of 0.5 μm or less and a peak position of more than 0.5 μm,

in which the volume ratio of the peak at the peak position of 0.5 μm or less is smaller than the volume ratio of the peak at the peak position of more than 0.5 μm.

The sulfide solid electrolyte of the present embodiment can be produced by the method for producing a sulfide solid electrolyte of the present embodiment described above, and from the viewpoint of producing more efficiently, it is preferably produced by the method for producing a sulfide solid electrolyte of the present embodiment described above. That is, the sulfide solid electrolyte of the present embodiment becomes a sulfide solid electrolyte with improved ionic conductivity.

The sulfide solid electrolyte of the present embodiment contains lithium atoms, phosphorus atoms, sulfur atoms, and halogen atoms. These atoms are derived from the solid electrolyte raw materials contained in the raw material-containing substance used in the producing method of the present embodiment described above.

The sulfide solid electrolyte of the present embodiment contains a complexing agent and a solvent (high boiling point solvent) having a boiling point which is higher than the boiling point of the complexing agent. The complexing agent and the high boiling point solvent are the complexing agent and the high boiling point solvent used in the producing process, and can be said to be the characteristics of the sulfide solid electrolyte obtained by the producing method of the present embodiment.

The complexing agent and the solvent having a boiling point higher than the boiling point of the complexing agent are the same as those explained in the producing method of the present embodiment. Furthermore, the contents of the complexing agent and high boiling point solvent contained in the sulfide solid electrolyte of the present embodiment are also as described above.

(Peak of the particle size distribution)

The sulfide solid electrolyte of the present embodiment has characteristics regarding particle size distribution,

in which the particle size distribution measured by laser diffraction scattering type particle size distribution analysis has a peak at a peak position of 0.5 μm or less and a peak position of more than 0.5 μm,

in which the volume ratio of the peak at the peak position of 0.5 μm or less is smaller than the volume ratio of the peak at the peak position of more than 0.5 μm. In the description herein, the particle size distribution measured by laser diffraction scattering type particle size distribution analysis is a particle size distribution measured based on a volume.

As described above, these characteristics of the particle size distribution, that is, the characteristics in which particle size distribution has two peaks, and the volume ratio of the peak with the small particle size is large, can be said to be a unique characteristic of the sulfide solid electrolyte obtained by heating in a high boiling point solvent to remove a complexing agent, which cannot be confirmed with sulfide solid electrolytes produced by conventional liquid phase method (heterogeneous method).

The sulfide solid electrolyte of the present embodiment may be either an amorphous sulfide solid electrolyte or a crystalline sulfide solid electrolyte. As the amorphous sulfide solid electrolyte and the crystalline sulfide solid electrolyte that can the sulfide solid electrolyte of the present embodiment can be, the amorphous sulfide solid electrolyte and the crystalline sulfide solid electrolytes, which are explained as being obtained by the producing method of the present embodiment, are preferred.

As the crystalline sulfide solid electrolyte, when it has thio-LISICON Region II type crystal structure or Argyrodite type crystal structure, high ionic conductivity can be obtained.

The average particle diameter ($D_{50}$) of the sulfide solid electrolyte of the present embodiment is as described as the properties of the sulfide solid electrolyte obtained by the producing method of the present embodiment described above, and is, for example, 0.01 μm or more, further, 0.03 μm or more, 0.05 μm or more, and 0.1 μm or more, and the upper limit is 5 μm or less, further, 3.0 μm or less, 1.5 μm or less, 1.0 μm or less, and 0.5 μm or less. Considering use in a positive electrode, a negative electrode, and an electrolyte layer, it is preferably 0.03 μm or more, more preferably 0.05 μm or more, and even more preferably 0.1 μm or more, and the upper limit is preferably 5.0 μm or less, more preferably 1.0 μm or less, and even more preferably 0.5 μm or less.

Further, the specific surface area of the sulfide solid electrolyte of the present embodiment is as described as the properties of the sulfide solid electrolyte obtained by the producing method of the present embodiment described above.

(Application)

The sulfide solid electrolyte of the present embodiment has high ionic conductivity and excellent battery performance, and thus is suitably used for a battery.

The sulfide solid electrolyte of the present embodiment may be used for the positive electrode layer, the negative electrode layer, or the electrolyte layer. Each layer can be produced by a known method.

In addition, in the battery, a current collector is preferably used in addition to the positive electrode layer, the electrolyte layer, and the negative electrode layer, and a known current collector can be used. For example, a layer obtained by coating a material that reacts with the solid electrolyte, such as Au, Pt, Al, Ti, or Cu, with Au can be used.

[Electrode mixture]

The electrode mixture using the sulfide solid electrolyte of the present embodiment is an electrode mixture containing the sulfide solid electrolyte of the present embodiment described above and an electrode active material.

(Electrode active material)

As the electrode active material, a positive electrode active material and a negative electrode active material are adopted respectively, depending on whether the electrode mixture is used for a positive electrode or a negative electrode.

As the positive electrode active material, in relation to the negative electrode active material, any atom can be used without any particular limitation, as long as it is an atom adopted as an atom that exhibits ionic conductivity, preferably the one which can promote battery chemical reactions involving the movement of lithium ions due to lithium atoms. Examples of the positive electrode active materials capable of insertion/extraction of lithium ions include oxide-based positive electrode active materials and sulfide-based positive electrode active materials.

As the oxide-based positive electrode active materials, lithium-containing transition metal composite oxides such as LMO (lithium manganate), LCO (lithium cobalt oxide), NMC (lithium nickel manganese cobalt oxide), NCA (lithium nickel cobalt aluminate), LNCO (lithium nickel cobalt oxide), and olivine type compounds ($LiMeNPO_4$, Me=Fe, Co, Ni, Mn), are preferred.

Examples of the sulfide-based positive electrode active material include titanium sulfide ($TiS_2$), molybdenum sulfide ($MoS_2$), iron sulfide (FeS, FeSz), copper sulfide (CuS), and nickel sulfide ($Ni_2S_2$).

In addition to the above positive electrode active materials, niobium selenide (NbSej), etc., can also be used.

The positive electrode active material can be used alone or in combination of multiple types.

As the negative electrode active material, any materials can be used without any particular limitations as long as it can promote battery chemical reactions involving the movement of lithium ions preferably derived from lithium atoms, such as atoms adopted as atoms that exhibit ionic conductivity, preferably metals that can form alloys with lithium atoms, oxides thereof, and alloys of the metals with lithium atoms. As the negative electrode active material capable of insertion/extraction of lithium ions, any known negative electrode active material in the field of batteries can be used without limitation.

Examples of such negative electrode active materials include metallic lithium such as metallic lithium, metallic indium, metallic aluminum, metallic silicon, and metallic tin, or metals which can form an alloy with metallic lithium, oxides of these metals, and further, alloys of these metals and metallic lithium.

The electrode active material may have a coating layer in which the surface is coated.

Examples of the material forming the coating layer include atoms that exhibit ionic conductivity in the sulfide solid electrolyte, preferably nitride and oxide of lithium atom, or ionic conductors such as mixtures thereof. Specifically, examples include conductors having a LISICON type crystal structure such as $Li_{4-2x}Zn_xGeO_4$, whose main structure is lithium nitride ($Li_3N$) or $Li_4GeO_4$, conductors having a thio-LISICON type crystal structure such as $Li_{4-x}Ge_{1-x}P_xS_4$ having a $Li_3PO_4$ type skeleton structure, conductors having a perovskite crystal structure such as $La_{2/3-x}Li_{3x}TiO_3$, and conductor having a NASICON type crystal structure such as $LiTi_2(PO_4)_3$.

In addition, examples include lithium titanate such as $Li_yTi_{3-y}O_4$ (0<y<3) and $Li_4Ti_5O_{12}$ (LTO), lithium metal oxides of metals belonging to Group 5 of the periodic table such as $LiNbO_3$ and $LiTaO_3$, also, oxide-based conductors such as $Li_2O-B_2O_3-P_2O_5$ system, $Li_2O-B_2O_3-ZnO$ system, and $Li_2O-Al_2O_3-SiO_2-P_2O_5-TiO_2$ system.

The electrode active material having a coating layer can be obtained, for example, by attaching a solution containing various atoms constituting the material forming the coating layer on the surface of the electrode active material, and then sintering the electrode active material after attachment, preferably at 200°C or higher and 400°C or lower.

Here, as the solution containing various atoms, a solution containing alkoxides of various metals such as lithium ethoxide, titanium isopropoxide, niobium isopropoxide, and tantalum isopropoxide may be used. In this case, as the solvent, an alcoholic solvent such as ethanol or butanol; an aliphatic hydrocarbon solvent such as hexane, heptane or octane; or an aromatic hydrocarbon solvent such as benzene, toluene or xylene, may be used.

Further, the above-described attachment may be performed by immersion, spray coating, etc.

From the viewpoint of improving manufacturing efficiency and battery performance, the firing temperature is preferably 200°C or higher and 400°C or lower, and more preferably 250°C or higher and 390°C or lower, and the firing time is usually about 1 minute to 10 hours and preferably 10 minutes to 4 hours.

The coverage rate of the coating layer is, based on the surface area of the electrode active material, preferably 90% or more, more preferably 95% or more, and even more preferably 100%, that is, the entire surface is preferably covered. Further, the thickness of the coating layer is preferably 1 nm or more and more preferably 2 nm or more, and the upper limit is preferably 30 nm or less and more preferably 25 nm or less.

For the thickness of the coating layer, it can be measured by cross-sectional observation using a transmission electron microscope (TEM), and for the coverage rate, it can be calculated from the thickness of the coating layer, elemental analysis value, BET specific surface area.

(Other component)

The electrode mixture using the sulfide solid electrolyte of the present embodiment may also contain other components such as a conductive material and a binder in addition to the sulfide solid electrolyte and electrode active material described above. That is, for the method for producing an electrode mixture of the present embodiment, other components such as a conductive material and a binder may also be used, in addition to the sulfide solid electrolyte and electrode active material described above. Other components such as a conductive material and a binder may be added to the sulfide solid electrolyte and electrode active material to be blended and used, in mixing the sulfide solid electrolyte and electrode active material.

Examples of the conductive materials include, from the viewpoint of improving battery performance by improving electronic conductivity, carbon-based materials such as artificial graphite, graphite carbon fiber, resin sintered carbon, pyrolytic vapor deposition carbon, coke, mesocarbon microbeads, furfuryl alcohol resin sintered carbon, polyacene, pitch-based carbon fiber, vapor deposition carbon fiber, natural graphite, and non-graphitizable carbon.

By using a binder, the strength is improved, when a positive electrode and a negative electrode are prepared.

The binder is not particularly limited as long as it can provide functions such as binding property and flexibility, and examples include fluoropolymers such as polytetrafluoroethylene and poly vinylidene fluoride, thermoplastic elastomers such as butylene rubber, styrenebutadiene rubber, and various resins such as acrylic resin, acrylic polyol resin, polyvinyl acetal resin, polyvinyl butyral resin, and silicone resin.

The blending ratio (mass ratio) of the electrode active material and the sulfide solid electrolyte in the electrode mixture is preferably 99.5:0.5 to 40:60, more preferably 99:1 to 50:50, and even more preferably 98:2 to 60:40, in order to improve battery performance and consider production efficiency.

When containing a conductive material, the content of the conductive material in the electrode mixture is not particularly limited, however in order to improve battery performance and consider production efficiency, it is preferably 0.5% by mass or more, more preferably 1% by mass or more, and even more preferably 1.5% by mass or more, and the upper limit is preferably 10% by mass or less, more preferably 8% by mass or less, and even more preferably 5% by mass or less.

When containing a binder, the content of the binder in the electrode mixture is not particularly limited, however in order to improve battery performance and consider production efficiency, it is preferably 1% by mass or more, more preferably 3% by mass or more, and even more preferably 5% by mass or more, and the upper limit is preferably 20% by mass or less, more preferably 15% by mass or less, and even more preferably 10% by mass or less.

[Lithium ion battery]

The lithium ion battery using the sulfide solid electrolyte of the present embodiment is a lithium ion battery containing at least one selected from the sulfide solid electrolyte of the present embodiment described above and the electrode mixture described above.

For the lithium ion battery using the sulfide solid electrolyte of the present embodiment, the constitution is not particularly limited as long as the sulfide solid electrolyte of the present embodiment or the electrode mixture containing the same, and it may have the constitution of a commonly used lithium ion batteries.

The lithium ion battery using the sulfide solid electrolyte of the present embodiment is preferably equipped with, for example, a positive electrode layer, a negative electrode layer, an electrolyte layer, and a current collector. It is preferable that an electrode mixture using the sulfide solid electrolyte of the present embodiment is used as the positive electrode layer and the negative electrode layer, and it is preferable that the sulfide solid electrolyte of the present embodiment is used as the electrolyte layer.

Further, a known current collector may be used. For example, a layer obtained by coating a material that reacts with the solid electrolyte, such as Au, Pt, Al, Ti, or Cu, with Au can be used.

Examples

Next, the present invention will be specifically described with reference to Examples, but the present invention is not limited to these Examples.

(Measurement of powder XRD diffraction)

Powder X-ray diffraction (XRD) measurement was performed as follows.
Each of the powders of the sulfide solid electrolyte obtained in Examples and Comparative Examples was filled in a groove having a diameter of 20 mm and a depth of 0.2 mm, and was leveled with glass to obtain a sample. This sample was sealed with a Kapton film for XRD and measured under the following conditions without being exposed to air.
Measuring device: D2 PHASER, manufactured by Bruker Co., Ltd.

Tube voltage: 30 kV
Tube current: 10 mA
X-ray wavelength: Cu-K$\alpha$ line (1.5418 Å)
Optical system: concentration method
Slit configuration: Using solar slit 4°, divergence slit 1mm, K$\beta$ filter (Ni plate)
Detector: semiconductor detector
Measurement range: $2\theta$ = 10 to 60 deg
Step width, Scan speed: 0.05 deg, 0.05 deg/second

(Measurement of Ionic Conductivity)

In the present examples, the ionic conductivity was measured as follows.
Circular pellets having diameters of 10 mm (cross-sectional area S: 0.785 cm$^2$) and heights (L) of 0.1 to 0.3 cm were molded from the crystalline solid electrolytes obtained in Example and Comparative example, to obtain samples. Electrode terminals were taken from the top and bottom of the sample, and measured by an AC impedance method at 25°C (frequency range: 5 MHz to 0.5 Hz, amplitude: 10 mV), and a Cole-Cole plot was obtained. The real part Z' ($\Omega$) at the point where -Z" ($\Omega$) becomes minimum in the vicinity of the right end of the arc observed in the high frequency side region was defined as the bulk resistance R ($\Omega$) of the electrolyte, and the ionic conductivity $\sigma$ (S/cm) was calculated according to the following equations.

$$R = \rho(L/S)$$

$$\sigma = 1/\rho$$

<Measurement of Specific Surface Area>

The specific surface area was measured by the BET method using nitrogen adsorption using a gas adsorption amount measuring device.

(Measurement of content of complexing agent and solvent contained in sulfide solid electrolyte)

The content of the complexing agent and solvent contained in the sulfide solid electrolyte was measured using a gas chromatography device (GC). The outline of the measurement is that a powder of a sulfide solid electrolyte, etc. decomposed with a mixture of water and pentanol (content of pentanol in the mixture: 90% by volume) is measured by GC, and the complexing agent and the solvent are quantitated using an absolute calibration curve.
First, 0.1 g of the sample is accurately weighed and placed in a vial. 10 ml of a mixture of water and pentanol is places into a vial and dissolved completely to decompose the sample completely. Approximately 1.5 ml of the dissolved sample is placed into a GC vial, covered with a lid, and stopped with a crimper. Set on the GC autosampler to be measured. For the calibration curve, 0.5 g of the solvent to be used is weighed out, and the volume is adjusted to 50 ml (equivalent to 10,000 $\mu$g/ml) by a mixture of water and pentanol. This is diluted and adjusted to 2500, 1000, 250, 25, 2.5 $\mu$g/ml (standard solution) and measured by GC, and a calibration curve is prepared using the least squares method from the peak area and the concentration of the standard solution. The GC peak area value of the sample solution was applied to the calibration curve, and the concentration in the sample solution was calculated according to the following formula.

Content of complexing agent and solvent in powder of a sulfide solid electrolyte, etc. (mass%) = [concentration determined from calibration curve ($\mu$g/ml) $\times$ amount of mixture of water and pentanol used for sample dissolution (10ml)] / sample amount (g)

(Measurement of particle size distribution)

Measured by using a laser diffraction/scattering particle size distribution measurement device ("Partica LA-950 (model number)", manufactured by Horiba, Ltd.). Specifically, a mixture of dehydrated toluene (manufactured by Wako Pure Chemical Industries, Ltd., special grade) and tertiary butyl alcohol (manufactured by Wako Pure Chemical Industries, Ltd., special grade) at a mass ratio of 93.8:6.2 was used as a dispersion medium. After injecting 50 mL of the dispersion medium into a flow cell of the device and circulating it, the powder to be measured was added and subjected to ultrasonic treatment, and then the particle size distribution was measured.

Further, the average particle diameter ($D_{50}$) was determined as the particle size that reached 50% (volume-based) of the total particle size by sequentially integrating the particles starting from the smallest particle size when the above-described particle size distribution integration curve was drawn.

(Measurement of complex weight ratio)

The complex mass ratio was measured by the weight reduction rate using a thermogravimetric analyzer (TG device). The powder (sample) to be measured in each Example and Comparative Example was vacuum dried at 80° C for 1 hour as a pretreatment for removing the solvent. After the pretreatment, 20 mg of the sample was heated at a rate of 10 °C/min from room temperature (23°C) to 600° C under a nitrogen stream. The numerical value calculated from the weight change before and after the treatment using the following formula was defined as the weight ratio of the complex in the powder.

Complex weight ratio (weight%) = (weight before heating - weight after heating) / weight before heating $\times$ 100

(Example 1)

13.19 g of lithium sulfide, 21.26 g of diphosphorus pentasulfide, 4.15 g of lithium bromide, and 6.40 g of lithium iodide were introduced into a I-liter reaction tank equipped with stirring blades under a nitrogen atmosphere. To this, 100 mL of tetramethylethylenediamine (TMEDA, boiling point: 120°C) as a complexing agent and 800 mL of cyclohexane as a solvent were added, and the stirring blades were operated to perform mixing by stirring at 30°C for 72 hours. 456 g of zirconia balls (diameter: 0.5 mm$\varphi$) (bead filling rate relative to grinding chamber: 80%) was charged into a bead mill which is capable of circulating operation ("Labo Star Mini LMZ015 (product name)", manufactured by Ashizawa Finetech Ltd.), pulverized for 60 minutes while circulating between the reaction tank and the grinding chamber under the conditions of pump flow rate: 550 mL/min, circumferential speed: 8 m/s, and mill jacket temperature: 20°C, to obtain a slurry of an electrolyte precursor (complex). Next, the obtained slurry was immediately dried under vacuum at room temperature (23°C) to obtain a powder of the electrolyte precursor (complex). The complex weight ratio of the obtained powder was measured by the method described above and was found to be 53% by weight.

The obtained powder of the electrolyte precursor was subjected to vacuum drying treatment at 70°C for 5 hours using a vibration dryer (manufactured by Chuo Kakoki Co., Ltd.) to perform constant rate drying. The complex weight ratio of the obtained powder was measured by the above method and was found to be 22% by weight. 3.5 g of this powder was mixed with 225 mL of normal decane (boiling point: 174°C) to prepare a normal decane slurry of the electrolyte precursor.

Next, 200 mL of normal decane (boiling point: 174°C) was placed as a high boiling point solvent in a 500 mL flask equipped with a thermometer and a stirrer, and the pressure inside the flask was controlled to be reduced pressure using a vacuum pump and a pressure reduction controller, and heated by immersing in an oil bath to be a boiling state at 100°C under 8 kPa. Subsequently, the normal decane slurry of the electrolyte precursor described above was gradually added into the flask to keep the liquid level in the flask constant. Further, normal decane was gradually added and this state was maintained for 1 hour, then heated to 110°C (the pressure inside the flask was 13 kPa, and normal decane was in a boiling state), and the complexing agent was removed by maintaining this state for 1 hour and performing decreasing rate drying. At this time, the high boiling point solvent and complexing agent that had volatilized in the flask were cooled with a circulating cooler and collected.

After removing the above complexing agent, the temperature inside the flask was raised from 110°C to 160°C at a rate of 20°C/hour (the pressure inside the flask was gradually restored with nitrogen to 68 kPa), and crystallization was performed. Note that, as in the decreasing rate drying, normal decane was supplied into the flask as necessary to keep the liquid level in the flask constant.

Thereafter, the normal decane was dried under vacuum conditions at 90°C for 1 hour, and the complex weight ratio of the obtained powder was measured by the above method and found to be 4% by weight.

When the powder obtained after crystallization was subjected to XRD measurement, crystallization peaks were mainly detected at $2\theta = 20.2°$ and $23.6°$ in the X-ray diffraction spectrum, and it was confirmed that it is a crystalline sulfide solid electrolyte having a thio-LISICON Region II type crystal structure. The results are shown in Fig. 1. When the ionic conductivity was measured, it was 2.4 (mS/cm) and the specific surface area was 31 ($m^2$/g). Further, the contents of the complexing agent and decane contained in the crystalline sulfide solid electrolyte were 0.8% by mass and 0.03% by mass, respectively.

Further, the crystalline sulfide solid electrolyte after crystallization was observed using a scanning electron microscope (SEM). A photograph taken by the scanning electron microscope (SEM) is shown in FIG. 2.

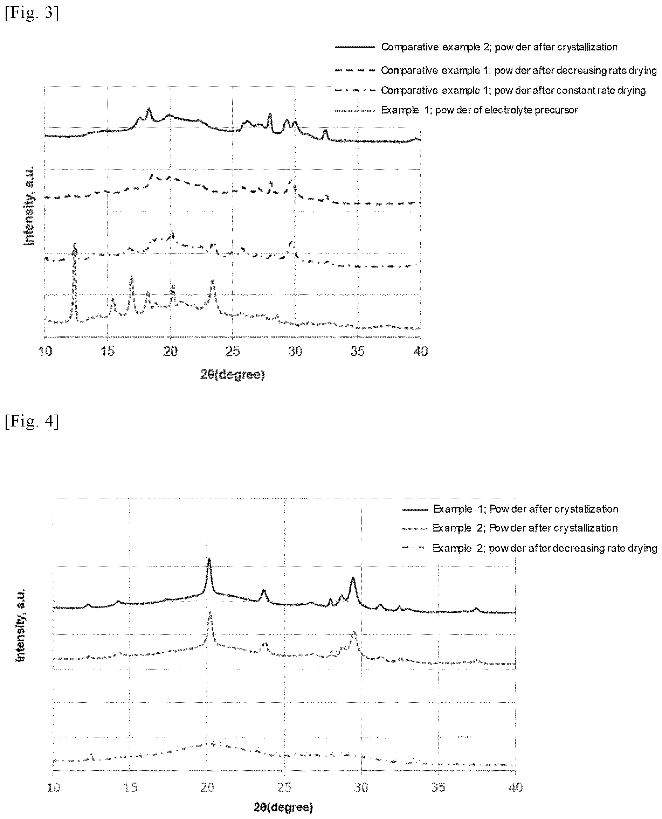

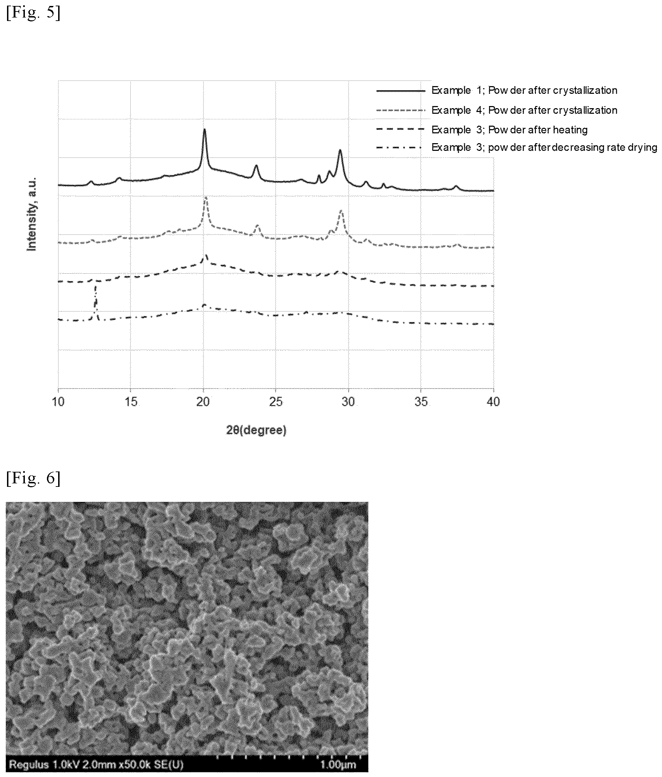

Further, the powder before the removal of the complexing agent (electrolyte precursor powder) and the powder after constant rate drying in the removal of the complexing agent, were also subjected to XRD measurement. The X-ray diffraction spectrum of the powder obtained after constant rate drying to remove the complexing agent shows no peaks derived from the electrolyte precursor powder or raw materials, and shows a halo pattern, therefore it was confirmed to be an amorphous sulfide solid electrolyte. The results of XRD measurements of the electrolyte precursor powder and the powder after constant rate drying are shown in Fig. 1. Further, the results of XRD measurement of the powder (electrolyte precursor powder) before the removal of the complexing agent are shown in Fig. 3, and the results of XRD measurement of the crystalline sulfide solid electrolyte are also shown in Figs. 4 and 5.

(Example 2)

Similarly to Example 1, normal decane was heated to 90°C in a flask (the pressure was 5 kPa, and normal decane became a boiling state), and then normal decane slurry was gradually added, maintained this state for 1 hour, then heated to 110°C (the pressure inside the flask was restored to 13 kPa, and normal decane became a boiling state), and the decreasing rate drying was performed by maintaining this state for 1 hour, to remove the complexing agent. At this time, the high boiling point solvent and complexing agent that had volatilized in the flask were cooled with a circulating cooler and collected. Further, normal decane was supplied into the flask as necessary to keep the liquid level in the flask constant.

After the removal of the complexing agent, the normal decane was dried under vacuum conditions at 90°C for 1 hour, and the complex weight ratio of the obtained powder was measured by the above method and found to be 12% by weight.

Furthermore, the powder after removing the complexing agent was transferred to a lab Schlenk, and heated at 160°C for 2 hours (in a vacuum atmosphere) while being evacuated with a vacuum pump to crystallize, and a powder of the crystalline sulfide solid electrolyte was obtained.

When the powder of the obtained crystalline sulfide solid electrolyte was subjected to XRD measurement, crystallization peaks were mainly detected at $2\theta = 20.2°$ and $23.6°$ in the X-ray diffraction spectrum, and it was confirmed that it is a crystalline sulfide solid electrolyte having a thio-LISICON Region II type crystal structure. The results are shown in Fig. 4. Further, the powder after the decreasing rate drying was also subjected to XRD measurement. The results are shown in Fig. 4.

(Example 3)

In Example 2, an electrolyte precursor (complex) powder (complex weight ratio: 53% by weight) was used, and constant rate drying was performed at 80 °C (the pressure was 4 kPa, and normal decane became a boiling state) by maintaining this state for 1 hour. Thereafter, performed in the same manner as in Example 2, up to the decreasing rate drying. Thereafter, the normal decane was dried under vacuum conditions at 90°C for 1 hour, and the complex weight ratio of the obtained powder was measured by the above method and found to be 8.5% by weight.

Further, the obtained powder was transferred to a lab Schlenk, and heated at 110° C for 2 hours while evacuating with a vacuum pump (in a vacuum atmosphere) to obtain a powder. The complex weight ratio of the obtained powder was measured by the above method and was found to be 6.4% by weight.

The powder obtained by performing the heating was subjected to XRD measurement, slight crystallization peaks due to the thio-LISICON Region II type crystal structure was mainly detected at $2\theta = 20.2°$ and $23.6°$ in the X-ray diffraction spectrum, however it was confirmed that it is an amorphous sulfide solid electrolyte having a halo pattern. The results are shown in Fig. 5. Further, the powder after the decreasing rate drying was also subjected to XRD measurement. The result is shown in Fig. 5.

(Example 4)

The powder obtained by removing the complexing agent of Example 3 was transferred to a lab Schlenk, and the crystallization was performed by heated at 160° C for 2 hours while evacuating with a vacuum pump (in a vacuum atmosphere) to obtain a powder. The complex weight ratio of the obtained powder was measured by the above method and was found to be 2.3% by weight.

When further XRD measurement was performed, crystallization peaks were mainly detected at $2\theta = 20.2°$ and 23.6° in the X-ray diffraction spectrum, and it was confirmed that it is a crystalline sulfide solid electrolyte having a thio-LISICON Region II type crystal structure. The result is shown in Fig. 5.

When the ionic conductivity of the obtained crystalline sulfide solid electrolyte was measured, it was 1.5 (mS/cm). Further, the contents of the complexing agent and decane contained in the crystalline sulfide solid electrolyte were 0.8% by mass and 0.03% by mass, respectively.

(Comparative example 1)

In the same manner as in Example 1, a powder of the electrolyte precursor powder (complex weight ratio: 53% by weight) was obtained. The obtained powder was mixed with 225 mL of heptane (boiling point: 98 °C) to prepare a heptane slurry of the electrolyte precursor. Next, 200 mL of heptane (boiling point: 98°C) was placed as a solvent in a 500 mL flask equipped with a thermometer and a stirrer, and it became a boiling state at 80°C under 57 kPa. While further heating, the heptane slurry of the electrolyte precursor was gradually added into the flask, the pressure was returned to normal pressure, the temperature was raised to 100°C (the heptane was in a boiling state), and this state was maintained for 2 hours, to remove the complexing agent. At this time, the solvent and complexing agent that had volatilized in the flask were cooled with a circulating cooler and collected. Further, heptane was supplied into the flask as necessary to keep the liquid level in the flask constant, and the constant rate drying was performed as the removal of the complexing agent. Thereafter, the heptane was dried under vacuum conditions at 80°C for 1 hour, and the complex weight ratio of the obtained powder was measured by the above method and found to be 22% by weight.

The obtained powder was transferred to a lab Schlenk, and heated at 110° C for 2 hours while evacuating with a vacuum pump (in a vacuum atmosphere), and the decreasing rate drying was performed to obtain a powder.

The powder of the constant rate drying and the powder after the decreasing rate drying were subjected to XRD measurement, and peaks due to various impurities were confirmed. The results are shown in Fig. 3.

(Comparative example 2)

The powder obtained in Comparative example 1 was further heated at 160° C for 2 hours while evacuating with a vacuum pump (in a vacuum atmosphere) in a lab Schlenk, and crystallization was performed, to obtain a powder.

When the powder obtained by crystallization was subjected to XRD measurement, crystallization peaks were slightly mainly detected at $2\theta = 20.2°$ and 23.6° in the X-ray diffraction spectrum, and although it could be said to have a thio-LISICON Region II type crystal structure, peaks due to various impurities were also confirmed. The results are shown in Fig. 3.

(Comparative example 3)

In the same manner as in Example 1, a powder of the electrolyte precursor (complex) was obtained. The complex weight ratio of the obtained powder was measured by the method described above and was found to be 53% by weight.

The obtained powder was further dried at 110°C under reduced pressure for 6 hours, and then crystallization was performed by heating at 160°C under reduced pressure for 2 hours to obtain a crystalline powder.

The obtained crystalline powder was observed using a scanning electron microscope (SEM). A photograph taken by the scanning electron microscope (SEM) is shown in Fig.6.

(Comparative example 4)

100 g of the crystalline powder obtained in Comparative Example 3 was introduced into a 3-liter reaction tank equipped with stirring blades, 2144 mL of heptane and 138 mL of diisopropyl ether (DiPE) were added, and stirred for 10 minutes to obtain a slurry. The obtained slurry was subjected to disruption treatment for 3 minutes by pass operation under predetermined conditions (Bead diameter: 0.05mm$\varphi$, amount of beads used: 1573g (bead filling amount relative to grinding chamber: 65%), pump flow rate: 1000mL/min, circumferential speed 6m/s) using a microbead mill ("MAX Nano Getter (product name)", manufactured by Ashizawa Finetech Ltd.) capable of circulating operation.

Further, the slurry which was subjected to pulverization treatment using the microbead mill was dried under vacuum at room temperature (23 °C) to obtain a pulverized powder.

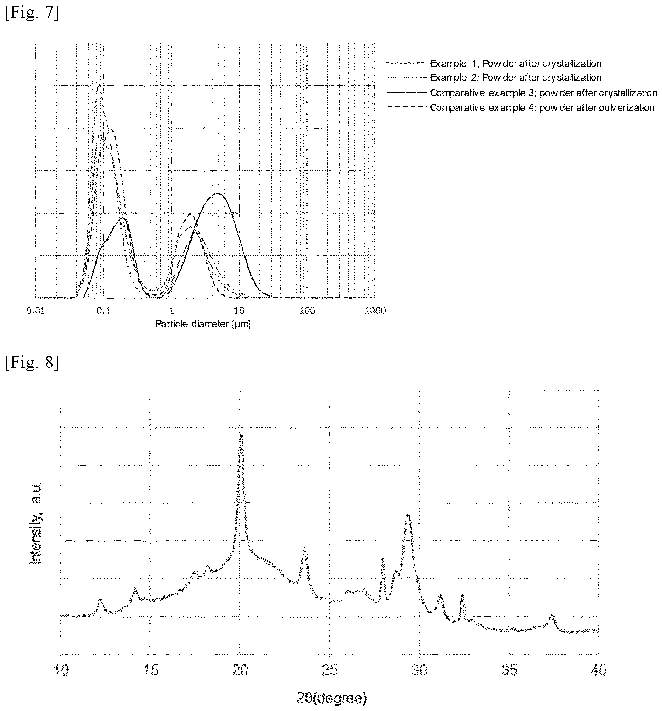

The powders of the crystalline sulfide solid electrolyte obtained in Examples 1 and 2, the powder after the crystallization obtained in Comparative Example 3, and the powder obtained in Comparative Example 4 were subjected to measurement of the particle size distribution in accordance with the above method. The measurement results are shown in Fig. 7.

According to the results in FIG. 7, the powders of Examples 1 and 2 had peaks at peak positions of 0.5 µm or less and peak positions of more than 0.5 µm, and it was confirmed that the volume ratio of the peak at the peak position of 0.5 µm or less was smaller than the volume ratio of the peak at the peak position of more than 0.5 µm. On the other hand, the powder after crystallization of Comparative Example 3 had two peaks similar to the powder of Example 1, however it was confirmed that the volume ratio of the peak at the peak position of 0.5 µm or less is larger than the volume ratio of the peak at the peak position of more than 0.5 µm.

Furthermore, from the results in Fig. 7, the powders of Examples 1 and 2 had a peak shape at a peak position of 0.5 µm or less which is sharper than a peak shape at a peak position of more than 0.5 µm, and it was also confirmed that the half-value width of the peak at the peak position of 0.5 µm or less was smaller than the half-value width of the peak at the peak position of more than 0.5 µm.

Furthermore, from Fig. 7, it was confirmed that the powder of Comparative Example 4 obtained by pulverizing (atomization) the powder of Comparative Example 3 had the same particle size distribution as the powder of Examples 1 and 2. From this, it was found that the powder of Example 1 has a particle size distribution even without pulverization (atomization), the particle size distribution which was not able to be obtained without pulverization (atomization) by the conventional liquid phase method (heterogeneous method).

Furthermore, from the above particle size distribution measurements, the average particle diameter (Dso) of the powders of Examples 1 and 2 was 0.15 µm and 0.12 µm, respectively, and the average particle diameter ($D_{50}$) of the powder of Comparative Example 3 was 3.0 µm, and the average particle size ($D_{50}$) of the powder of Comparative Example 4 was 0.15 µm.

The fact that the average particle size ($D_{50}$) of the powder of Comparative Example 3 is extremely larger than the average particle diameter ($D_{50}$) of the powders of Examples 1 and 2, is also supported by the fact that the crystalline sulfide solid electrolyte obtained in Example 1 has no aggregation occurred (Fig. 2), and the fact that the crystallized powder of Comparative Example 3 had a large amount of aggregation and secondary particles were generated (Fig. 6).

(Example 5)

In the same manner as in Example 1, a powder of the electrolyte precursor (complex) (the complex weight ratio was 53% by weight) was obtained.

3.5 g of the obtained electrolyte precursor (powder) was mixed with 225 mL of normal decane (boiling point: 174°C) to prepare a normal decane slurry of the electrolyte precursor. Normal decane was heated to 80°C in the flask (the pressure was 4 kPa, and normal decane became a boiling state), then the normal decane slurry was gradually added and this state was maintained for 1 hour, and constant rate drying was performed. At this time, the high boiling point solvent and complexing agent that had volatilized in the flask were cooled with a circulating cooler and collected. Further, normal decane was supplied into the flask as necessary to keep the liquid level in the flask constant, and this state was maintained to obtain a slurry.

Next, this obtained slurry was collected, normal decane was heated to 110°C in a flask (the pressure was 13 kPa, and normal decane became a boiling state), and then this slurry was gradually added, and maintained for 1 hour to perform the decreasing rate drying. Note that the liquid level in the flask was similarly kept constant.

Furthermore, this slurry was collected, normal decane was heated to 160°C in a flask (the pressure was 68 kPa, and normal decane became a boiling state), and then this slurry was gradually added, and maintained for 1 hour to perform the crystallization. Note that the liquid level in the flask was similarly kept constant.

Thereafter, the normal decane was dried under vacuum conditions at 90°C for 1 hour, and the complex weight ratio of the obtained powder was measured by the above method and found to be 2.7% by weight.

When the powder obtained after crystallization was subjected to XRD measurement, crystallization peaks were mainly detected at 20 = 20.2° and 23.6° in the X-ray diffraction spectrum, and it was confirmed that it is a crystalline sulfide solid electrolyte having a thio-LISICON Region II type crystal structure. The results are shown in Fig. 8. The ionic conductivity was measured and found to be 1.3 (mS/cm).

Industrial Applicability

According to the method for producing a sulfide solid electrolyte of the present embodiment, a sulfide solid electrolyte having high ionic conductivity can be efficiently produced. Furthermore, by simply increasing the amount of high boiling point solvent used, the amount of complexing agent that can be removed can be increased, therefore it can also be easily adapted to mass production.

The sulfide solid electrolytes of the present embodiment obtained by the producing method of the present embodiment are suitably used for batteries, in particular, batteries used for information-related devices such as personal computers, video cameras, and mobile phones, and communication devices.

**Claims**

1. A method for producing a sulfide solid electrolyte comprising:

   mixing a raw material-containing substance containing lithium atoms, phosphorus atoms, sulfur atoms and halogen atoms and a complexing agent to obtain an electrolyte precursor-containing substance; and then heating in a solvent having a boiling point which is higher than the boiling point of the complexing agent.

2. The method for producing a sulfide solid electrolyte according to claim 1,
   wherein a heating temperature of the solvent is higher than the boiling point of the complexing agent.

3. The method for producing a sulfide solid electrolyte according to claim 1 or 2,
   wherein the solvent is boiled in the heating in the solvent.

4. The method for producing a sulfide solid electrolyte according to claim 3,
   wherein a solvent having a boiling point which is higher than the boiling point of the complexing agent is prepared separately, and the electrolyte precursor-containing substance is added in the solvent used for the heating as a mixture blended with the separately prepared solvent.

5. The method for producing a sulfide solid electrolyte according to any one of claims 1 to 4,
   wherein the amount of the solvent used, relative to 1g of the supplied amount of the electrolyte precursor contained in the electrolyte precursor-containing substance, is 20 mL or more and 2000 mL or less.

6. The method for producing a sulfide solid electrolyte according to any one of claims 1 to 5, comprising drying the electrolyte precursor-containing substance.

7. The method for producing a sulfide solid electrolyte according to claim 6,
   wherein the drying is performed at a temperature of 5 °C or higher and 1 10 °C or lower under normal pressure or reduced pressure.

8. The method for producing a sulfide solid electrolyte according to any one of claims 1 to 7, comprising:
   after the heating in the solvent, further heating at a temperature which is higher than the heating temperature in the heating in the solvent.

9. The method for producing a sulfide solid electrolyte according to any one of claims 1 to 8,
   wherein the complexing agent is a compound having amino groups.

10. The method for producing a sulfide solid electrolyte according to any one of claims 1 to 9,
    wherein the complexing agent is a compound having at least two tertiary amino groups in the molecule.

11. The method for producing a sulfide solid electrolyte according to any one of claims 1 to 10,
    wherein the solvent is a hydrocarbon solvent which does not contain heteroatoms.

12. The method for producing a sulfide solid electrolyte according to any one of claims 1 to 11,
    wherein the solvent is at least one organic solvent selected from aliphatic hydrocarbon solvents and alicyclic hydrocarbon solvents.

13. The method for producing a sulfide solid electrolyte according to claim 12,
    wherein the carbon number of the organic solvent is 8 or more.

14. The method for producing a sulfide solid electrolyte according to any one of claims 1 to 13,
    wherein after the heating in the solvent, no pulverization treatment is performed.

15. The method for producing a sulfide solid electrolyte according to any one of claims 1 to 14,
    wherein in the heating in the solvent, the complexing agent is removed from the electrolyte precursor contained in the electrolyte precursor-containing substance.

16. The method for producing a sulfide solid electrolyte according to any one of claims 1 to 15,

wherein the sulfide solid electrolyte has a thio-LISICON Region II type crystal structure.

[Fig. 1]

[Fig. 2]

[Fig. 3]

Comparative example 2; pow der after crystallization
Comparative example 1; pow der after decreasing rate drying
Comparative example 1; pow der after constant rate drying
Example 1; pow der of electrolyte precursor

[Fig. 4]

Example 1; Pow der after crystallization
Example 2; Pow der after crystallization
Example 2; pow der after decreasing rate drying

[Fig. 5]

[Fig. 6]

[Fig. 7]

Particle diameter [μm]

Example 1; Powder after crystallization
Example 2; Powder after crystallization
Comparative example 3; powder after crystallization
Comparative example 4; powder after pulverization

[Fig. 8]

2θ(degree)

## INTERNATIONAL SEARCH REPORT

International application No.

**PCT/JP2023/012708**

### A. CLASSIFICATION OF SUBJECT MATTER

*H01B 13/00*(2006.01)i; *C01B 25/14*(2006.01)i
FI: H01B13/00 Z; C01B25/14

According to International Patent Classification (IPC) or to both national classification and IPC

### B. FIELDS SEARCHED

Minimum documentation searched (classification system followed by classification symbols)

H01B13/00; C01B25/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2021-190425 A (IDEMITSU KOSAN CO., LTD.) 13 December 2021 (2021-12-13) paragraphs [0044], [0061], [0064], [0069], [0073]-[0075], [0096], [0107], [0108], [0116] | 1-16 |

☐ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **02 June 2023** | **13 June 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

| Patent document cited in search report | | | Publication date (day/month/year) | Patent family member(s) | Publication date (day/month/year) |
|---|---|---|---|---|---|
| JP | 2021-190425 | A | 13 December 2021 | US 2021/0376377 A1 paragraphs [0057], [0058], [0078], [0083], [0088], [0095]-[0099], [0130], [0150], [0151], [0161] | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014191899 A
- WO 2014192309 A
- WO 2018054709 A
- WO 2020105737 A
- WO 2021230189 A
- JP 2013016423 A

**Non-patent literature cited in the description**

- *CHEMISTRY OF MATERIALS*, 2017 (29), 1830-1835
- *Aust. J. Chem.*, 1988, vol. 41, 1925-34
- *Solid State Ionics*, 2006, vol. 177, 2721-2725